# EUROPEAN PATENT APPLICATION

(11) **EP 1 840 147 A2**
(43) Date of publication of application: **03.10.2007**
(21) Application number: 07006691.5
(22) Date of filing: 30.03.2007
(51) Int. Cl.: C08G 18/71, C08G 18/28, C09D 175/04

(54) **Organic silicon compound, hydrophilic composition containing the same and hydrophilic member**

(30) Priority: 31.03.2006 JP 2006100897
(71) Applicant: FUJIFILM Corporation, Minato-ku Tokyo (JP)
(72) Inventor: Tanaka, Satoshi, Ashigarakami-gun Kanagawa (JP); Kunita, Kazuto, Haibara-gun, Shizuoka-ken (JP); Hoshi, Satoshi, Ashigarakami-gun Kanagawa (JP)
(74) Representative: HOFFMANN EITLE

(57) **Abstract**

According to an aspect of the invention, there is provided an organic silicon compound represented by the following Formula (I) or Formula (II):

Formula (I) (R¹)ₓ(OR²)₃₋ₓSi-L¹-(A)-L²Si(OR³)_{3-y}(R⁴)_{y}

Formula (II) (R⁵)_{z}(OR⁶)_{3-z}Si-L³-(B)-R ⁷

wherein, R¹ to R⁶ each independently represent a hydrogen atom or a hydrocarbon group having 8 or less carbon atoms; R⁷ represents a hydrogen atom or a monovalent non-metal atom group; x, y and z each independently represent an integer from 0 to 2; L¹, L² and L³ each independently represent a divalent linking group having three or more different atoms selected from the group consisting of a carbon atom, a hydrogen atom, an oxygen atom, a nitrogen atom and a sulfur atom; and A and B each independently represent a polymer or oligomer having a repeating structure formed by a structural unit.

## Description

### BACKGROUND OF THE INVENTION

### Field of the Invention

The present invention relates to an organic silicon compound, a hydrophilic composition containing the same, and a hydrophilic member, and to be more particular, the invention relates to a novel organic silicon compound which is useful for the formation of a hydrophilic coating superior in an anti-staining property and an anti-fogging property on the surface of various kinds of substrates, a hydrophilic composition containing the same, and a hydrophilic member having a hydrophilic coating formed by the hydrophilic composition.

### Description of the Related Art

Various techniques for preventing adhesion of oil stains on the surface of members have been proposed. In particular, stains such as fingerprints, sebum, sweat and cosmetics are adhered on optical members such as anti-reflective films, optical filters, optical lenses, spectacle lenses and mirrors during use, and functions thereof are deteriorated. Since removal of the stains is troublesome, it is desired to apply an effective anti-staining treatment. Further, along with the popularized use of mobile systems in recent years, displays have been used more and more outdoors. When they are used under conditions where external light is incident thereto, the incident light is regularly reflected on the display surface, and the reflected light is mixed with display light, causing a problem of making the display image difficult to see. Accordingly, an anti-reflective optical member has often been provided on the surface of the display.

Examples of known anti-reflective optical members include those formed by laminating a high refractive index layer and low refractive index layer, for example, of a metal oxide on the surface of a transparent substrate, those in which a low refractive index layer, for example, of an inorganic fluoro-compound or organic fluoro-compound is formed as a single layer on the surface of a transparent substrate, and those prepared by forming a coating layer containing fine transparent particles on the surface of a transparent plastic film substrate for diffuse reflection of external light by the uneven surface. These anti-reflective optical members also tend to undergo adhesion of stains such as fingerprints or sebum during use similarly to the optical members described above. This causes a problem of increasing the reflection only at the stain-adhered portions so that the stains show up clearly, as well as a problem in that removal of stains is difficult since fine unevenness is usually present on the anti-reflective film.

Various kinds of techniques have been proposed for providing an anti-staining function of making it difficult for stains to be adhered on or making it easy for adhered stains to be removed from the surface of a solid member. For example, it has been proposed to use an organic silicon compound represented by one of the following formulae as a compound for imparting an anti-staining property and an anti-fogging property to the surface of a support (for example, refer to Japanese Patent Application Laid-Open (JP-A) Nos. 10-231146 and 2000-239655).

CH₃O(C₂H₄O)₆ - ₉C₃H₆Si(OC₂H₅)₃

CH₃(CH₃O)₂SiC₃H₆0(C₂H₄O)₁₁C₃H₆Si(OCH₃)₂CH₃

However, when using these organic silicon compounds to form a coating on a support, the anti-staining property and anti-fogging property of the resulting coating is not sufficient. Accordingly, coating materials that are excellent in a surface hydrophilic property and exhibit sufficient anti-staining and anti-fogging properties in practical use have been desired.

### SUMMARY OF THE INVENTION

According to an aspect of the invention, there is provided an organic silicon compound represented by the following Formula (I) or Formula (II):

**Formula (I)** (R¹)ₓ(OR²)₃₋ₓSi-L¹-(A)-L²-Si(OR³)_{3-y}(R⁴)_{y}

**Formula (II)** (R⁵)_{z}(OR⁶)_{3-z}Si-L³-(B)-R⁷

wherein, in Formula (I), R¹ to R⁴ each independently represent a hydrogen atom or a hydrocarbon group having 8 or less carbon atoms; x and y each independently represent an integer from 0 to 2; L¹ and L²each independently represent a divalent linking group having three or more different atoms selected from the group consisting of a carbon atom, a hydrogen atom, an oxygen atom, a nitrogen atom and a sulfur atom; and A represents a polymer or oligomer having a repeating structure formed by a structural unit; and
in Formula (II), R⁵and R⁶ each independently represent a hydrogen atom or a hydrocarbon group having 8 or less carbon atoms; R⁷ represents a hydrogen atom or a monovalent non-metal atom group; z represents an integer from 0 to 2; L³ represents a divalent linking group having three or more different atoms selected from the group consisting of a carbon atom, a hydrogen atom, an oxygen atom, a nitrogen atom and a sulfur atom; and B represents a polymer or oligomer having a repeating structure formed by a structural unit.

### DETAILED DESCRIPTION OF THE INVENTION

Hereinafter, the present invention will be described in detail.

The organic silicon compound of the invention is represented by the following Formula (I) or Formula (II):

**Formula (I)** (R¹)ₓ(OR²)₃₋ₓSi-L¹-(A)-L²-Si(OR³)_{3-y}(R⁴)_{y}

**Formula (II)** (R⁵)_{z}(OR⁶)_{3-z}Si-L³-(B)-R⁷

wherein, in Formula (I), R¹ to R⁴ each independently represent a hydrogen atom or a hydrocarbon group having 8 or less carbon atoms; x and y each independently represent an integer from 0 to 2; L¹ and L² each independently represent a divalent linking group having three or more different atoms selected from the group consisting of a carbon atom, a hydrogen atom, an oxygen atom, a nitrogen atom and a sulfur atom; and A represents a polymer or oligomer having a repeating structure formed by a structural unit; and
in Formula (II), R⁵ and R⁶ each independently represent a hydrogen atom or a hydrocarbon group having 8 or less carbon atoms; R⁷ represents a hydrogen atom or a monovalent non-metal atom group; z represents an integer from 0 to 2; L³ represents a divalent linking group having three or more different atoms selected from the group consisting of a carbon atom, a hydrogen atom, an oxygen atom, a nitrogen atom and a sulfur atom; and B represents a polymer or oligomer having a repeating structure formed by a structural unit.

First of all, the organic silicon compound of the invention will be explained.

### [Organic silicon compound represented by Formula (I) or Formula (II)]

The organic silicon compound of the invention is represented by the following Formula (I) or Formula (II), and in the present specification, for convenience's sake, the organic compound of the invention may be referred to as the specific organic silicon compound (a).

**Formula (I)** (R¹)ₓ(OR²)₃₋ₓSi-L¹-(A)-L²-Si(OR³)_{3-y}(R⁴)_{y}

**Formula (II)** (R⁵)_{z}(OR⁶)_{3-z}Si-L³-(B)-R⁷

In the formula (I) and Formula (II), R¹ to R⁶ each independently represent a hydrogen atom or a hydrocarbon group having 8 or less carbon atoms; R⁷ represents a hydrogen atom or a monovalent non-metal atom group; x, y and z each independently represent an integer from 0 to 2; L¹ to L³ each independently represent a divalent linking group having three or more different atoms selected from the group consisting of a carbon atom, a hydrogen atom, an oxygen atom, a nitrogen atom and a sulfur atom.

A and B each independently represent a polymer or oligomer having a repeating structure formed by a structural unit.

In a case where R¹ to R⁶ represent a hydrocarbon group, examples of the hydrocarbon group include alkyl groups and aryl groups, and a linear, branched or cyclic alkyl group having 1 to 8 carbon atoms is preferred. Specific examples include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.

R¹ to R⁶ are preferably a hydrogen atom, a methyl group, or an ethyl group from a viewpoint of the effect and the easy availability.

These hydrocarbon groups may further have a substituent. In a case where the alkyl group has a substituent, the substituted alkyl group is formed by bonding of the substituent and an alkylene group. As the substituent, a monovalent non-metal atom group excluding a hydrogen atom group is used. Preferred examples include a halogen atom (-F, -Br, -Cl, -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, an ureido group, an N'-alkylureido group, an N',N'-dialkyl ureido group, an N'-aryl an ureido group, an N',N'-diaryl ureido group, an N'-alkyl-N'-aryl ureido group, an N-alkyl ureido group, an N-aryl ureido group, an N'-alkyl-N-alkyl an ureido group, an N'-alkyl-N-aryl ureido group, an N',N'-dialkyl-N-alkyl ureido group, an N',N'-dialkyl-N-aryl ureido group, an N'-aryl-N-alkyl ureido group, an N'-aryl-N-aryl ureido group, an N',N'-diaryl-N-alkyl ureido group, an N',N'-diaryl-N-aryl ureido group, an N'-alkyl-N'-aryl-N-alkyl ureido group, an N'-alkyl-N'-aryl-N-aryl ureido group, an alkoxy carbonyl amino group, an aryloxy carbonyl amino group, an N-alkyl-N-alkoxy a carbonyl amino group, an N-alkyl-N-aryloxy carbonyl amino group, an N-aryl-N-alkoxy carbonyl amino group, an N-aryl-N-aryloxy carbonyl amino group, a formyl group, an acyl group, a carboxyl group, an alkoxycarbonyl group, an aryloxy carbonyl group, an carbamoyl group, an N-alkyl carbamoyl group, an N,N-dialkyl carbamoyl group, an N-aryl carbamoyl group, an N,N-diaryl carbamoyl group, an N-alkyl-N-aryl carbamoyl group, an alkyl sulfinyl group, an aryl sulfinyl group, an alkyl sulfonyl group, an aryl sulfonyl group, a sulfo group (-SO₃H) and a conjugate base group thereof (hereinafter referred to as a sulfonate group), an alkoxy sulfonyl group, an aryloxy sulfonyl group, an sulfinamoyl group, an N-alkyl sulfinamoyl group, an N,N-dialkyl sulfinamoyl group, an N-aryl sulfinamoyl group, an N,N-diaryl sulfinamoyl group, an N-alkyl-N-aryl sulfinamoyl group, a sulfamoyl group, an N-alkyl sulfamoyl group, an N,N-dialkyl sulfamoyl group, an N-aryl sulfamoyl group, an N,N-diaryl sulfamoyl group, an N-alkyl-N-aryl sulfamoyl group, a phosphono group (-PO₃H₂) and a conjugate base group thereof (hereinafter referred to as a phosphonate group), a dialkyl phosphono group (-PO₃(alkyl)₂), a diaryl phosphono group (-PO₃(aryl)₂), an alkylaryl phosphono group (-PO₃(alkyl)(aryl)), a monoalkyl phosphono group (-PO₃H(alkyl)) and a conjugate base group thereof (hereinafter referred to as an alkyl phosphonate group), a monoaryl phosphono group (-PO₃H(aryl)) and a conjugate base group thereof (hereinafter referred to as an aryl phosphonate group), a phosphonoxy group (-OPO₃H₂) and a conjugate base group thereof (hereinafter referred to as a phosphonate oxy group), a dialkyl phosphonoxy group (-OPO₃(alkyl)₂), a diaryl phosphonoxy group (-OPO₃(aryl)₂), an alkylaryl phosphonoxy group (-OPO(alkyl)(aryl)), a monoalkyl phosphonoxy group (-OPO₃H(alkyl)) and a conjugate base group thereof (hereinafter referred to as an alkyl phosphonatoxy group), a monoaryl phosphonoxy group (-OPO₃H(aryl)) as well as a conjugate base group (hereinafter referred to as an aryl phosphonatoxy group), a morpholino group, a cyano group, a nitro group, an aryl group, an alkenyl group, and an alkynyl group.

Specific examples of the alkyl group in the substituents described above include the same alkyl groups as mentioned for R¹ to R⁶ and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyl phenyl group, a methoxy phenyl group, an ethoxy phenyl group, a phenoxy phenyl group, an acetoxy phenyl group, a benzoyloxy phenyl group, a methylthio phenyl group, a phenylthio phenyl group, a methylamino phenyl group, a dimethylamiho phenyl group, an acetylamino phenyl group, a carboxy phenyl group, a methoxy carbonyl phenyl group, an ethoxy phenyl carbonyl group, a phenoxy carbonyl phenyl group, an N-phenyl carbamoyl phenyl group, a phenyl group, a cyano phenyl group, a sulfo phenyl group, a sulfonate phenyl group, a phosphono phenyl group, and a phosphonate phenyl group. Further, examples of the alkenyl group include a vinyl group, a 1-propenyl group, a 1-butenyl group, a cynnamyl group, and a 2-chloro-1-ethenyl group, and examples of the alkynyl group include an ethynyl group, a 1-propinyl group, a 1-butynyl group, and a trimethyl silyl ethynyl group. Examples of G¹ in the acyl group (G¹CO-) include hydrogen, and the alkyl group and the aryl group described above.

Among these substituents, more preferred examples include a halogen atom (-F, -Br, -Cl, -I), an alkoxy group, an aryloxy group, an alkylthio group, an arylthio group, an N-alkylamino group, an N,N-dialkylamino group, an acyloxy group, an N-alkyl carbamoyloxy group, an N-aryl carbamoyloxy group, an acylamino group, a formyl group, an acyl group, a carboxyl group, an alkoxy carbonyl group, an aryloxy carbonyl group, a carbamoyl group, an N-alkyl carbamoyl group, an N,N-dialkyl carbamoyl group, an N-aryl carbamoyl group, an N-alkyl-N-aryl carbamoyl group, a sulfo group, a sulfonate group, a sulfamoyl group, an N-alkyl sulfamoyl group, an N,N-dialkyl sulfamoyl group, an N-aryl sulfamoyl group, an N-alkyl-N-aryl sulfamoyl group, a phosphono group, a phosphonate group, a dialkyl phosphono group, a diaryl phosphono group, a monoalkyl phosphono group, an alkyl phosphonate group, a monoaryl phosphono group, an aryl phosphonate group, a phosphonooxy group, a phosphonateoxy group, an aryl group, and an alkenyl group.

On the other hand, examples of the alkylene group in the substituted alkyl group include those formed by removing one of hydrogen atoms on the above described alkyl group having 1 to 20 carbon atoms to form a bivalent organic residue, and preferable examples include a linear alkylene group having 1 to 12 carbon atoms, a branched alkylene group having 3 to 12 carbon atoms, and a cyclic alkylene group having 5 to 10 carbon atoms. Preferred specific examples of the substituted alkyl group obtained by combination of the substituent and the alkylene group include a chloromethyl group, a bromomethyl group, a 2-chloroethyl group, a trifluoromethyl group, a methoxymethyl group, a methoxyethoxy ethyl group, an allyloxy methyl group, a phenoxy methyl group, a methyl thiomethyl group, a tolylthio methyl group, an ethylamino ethyl group, a diethylamino propyl group, a morpholino propyl group, an acetyloxy methyl group, a benzoyloxy methyl group, an N-cyclohexyl carbamoyloxy ethyl group, an N-phenyl carbamoyloxy ethyl group, an acetylamino ethyl group, an N-methyl benzoyl amino propyl group, a 2-oxyethyl group, a 2-oxypropyl group, a carboxy propyl group, a methoxy carbonyl ethyl group, an allyloxy carbonyl butyl group,
a chlorophenoxy carbonyl methyl group, a carbamoyl methyl group, an N-methyl carbamoyl ethyl group, an N,N-dipropyl carbamoyl methyl group, an N-(methoxyphenyl) carbamoyl ethyl group, an N-methyl-N-(sulfophenyl) carbamoyl methyl group, a sulfobutyl group, a sulfonate butyl group, a sulfamoyl butyl group, an N-ethyl sulfamoyl methyl group, an N,N-dipropyl sulfamoyl propyl group, an N-tolylsulfamoyl propyl group, an N-methyl-N-(phosphonophenyl) sulfamoyl octyl group, a phosphono butyl group, a phosphonate hexyl group, a diethyl phosphono butyl group, a diphenyl phosphono propyl group, a methyl phosphono butyl group, a methyl phosphonate butyl group, a tolyl phosphono hexyl group, a tolyl phosphonate hexyl group, a phosphonoxy propyl group, a phosphonateoxy butyl group, a benzyl group, a phenethyl group, an α-methyl benzyl group, a 1-methyl-1-phenyl ethyl group, a p-methyl benzyl group, a cynnamyl group, an allyl group, a 1-propenyl methyl group, a 2-butenyl group, a 2-methyl allyl group, a 2-methyl propenyl methyl group, a 2-propynyl group, a 2-butynyl group, and an 3-butynyl group, etc.
x, y and z each independently represent 0, 1, or 2, and 0 is preferred among them.

Examples of the monovalent non-metal atom group represented by R⁷ include the monovalent non-metal atom groups mentioned as the specific examples of R¹ to R⁶, and preferable specific examples include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopenyl group, a 1-methyl butyl group, an isohexyl group, a 2-ethyl hexyl group, a 2-methyl hexyl group, a cyclopentyl group, a halogen atom, a hydroxyl group and the like. From the viewpoints of the hydrophilicity improvement and the easy availability thereof, a hydrogen atom, a methyl group and a hydroxyl group are preferable.

L¹ to L³ each independently represent a divalent linking group having three or more different atoms selected from the group consisting of a carbon atom, a hydrogen atom, a oxygen atom, a nitrogen atom and a sulfur atom. To be more specific, it may include 1 to 60 carbon atoms, 0 to 10 nitrogen atoms, 0 to 50 oxygen atoms, 1 to 100 hydrogen atoms and 0 to 20 sulfur atoms. That is, examples of this linking group do not include a divalent linking group consisting of only carbon atoms and hydrogen atoms, such as a non-substituted alkylene group. More specific examples of the linking groups include those formed by only one of the following structural units except structural units having only two kinds of atoms and those formed by a plurality of the following structural units

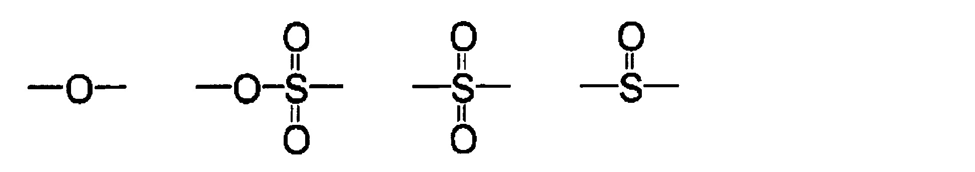

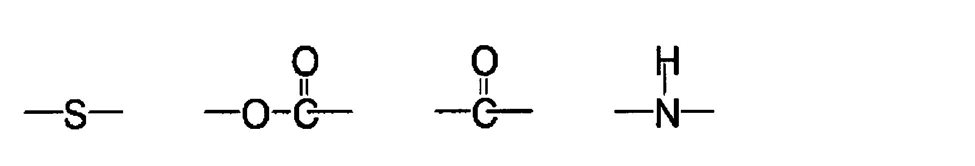

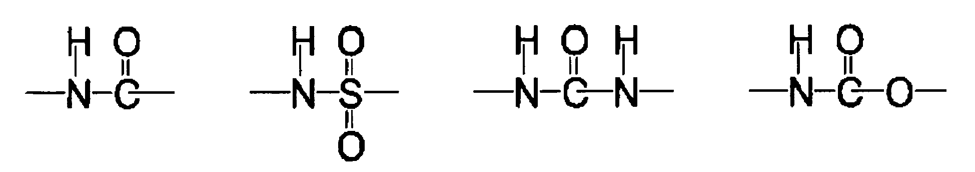

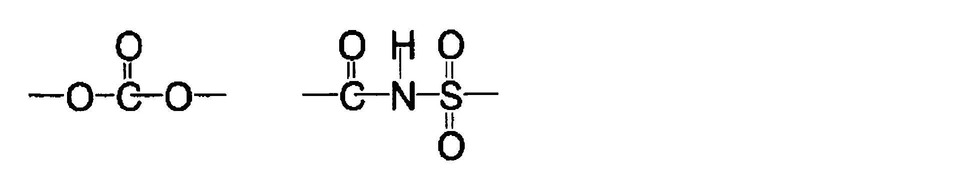

A and B each independently represent a polymer or oligomer having a repeating structure formed by a structural unit. That is, each of A and B may be a polymer in which a structural unit forms a repeating structure or an oligomer in which a structural unit forms a repeating structure. The polymer or oligomer preferably has at least one structure including polyacrylate, polymethacrylate, polyacrylonitrile, polyvinyl, polystyrene or the like, which is formed by an unsaturated double bond type monomer. Alternatively, poly(oxyalkylene), polyurethane, polyurea, polyester, polyamide, polyimide, polycarbonate, polyamino acid, polysiloxane and the like are preferable, poly(oxyalkylene), polyurethane, polyurea, polyester and polyamide are more preferable, and poly(oxyalkylene), polyurethane and polyurea are particularly preferable.

Structural units forming the polymer or oligomer may be one kind or two or more kinds.

The molecular weight of the organic silicon compound is preferably in the range of 100 to 1,000,000, more preferably in the range of 1,000 to 500,000, and most preferably in the range of 1,000 to 200,000. In order to have such a preferable molecular weight, the structure of the terminal alkoxy silyl group, the structure of the polymer or oligomer represented by A or B, the polymerization molar ratio and the polymerization number may be selected.

Specific examples of the organic silicon compounds represented by the Formula (I) or Formula (II) which can be preferably used in the invention will be mentioned, but the invention is not limited by these examples. In the case that A or B is a polymer having an alkylene oxide in the main chain structure, the numerical values shown in the structural units represent polymerization molar ratios of the respective structural units and the numerical values shown in the repeating units in the side chain structures represent a linkage number of the actual repeating units. In the case that A or B is polyurethane or polyurea, the terminal structures and the monomer structures are shown in the Table. That is, in the actual polymer, the terminal structure and the monomer structure are chemically bonded to form an urethane or urea bonding. Further, the numerical values shown in the monomer structures in the Table represent the composition ratios of the monomers at the time when the polymer is formed.

First of all, specific examples of the structures represented by the Formula (I) [Exemplified compounds (I-1) to (1-34)] will be shown together with the weight average molecular weights thereof (M.W.). Some of the exemplified compounds are shown by the monomers for forming the exemplified compounds (and the molar composition ratios) and the compounds to be introduced into the terminals of the copolymer obtained by polymerizing the monomers. Such exemplified compounds are formed by these monomers and compounds. When only one compound to be introduced into the terminals is mentioned, it means that the compound is introduced to both of the terminals.

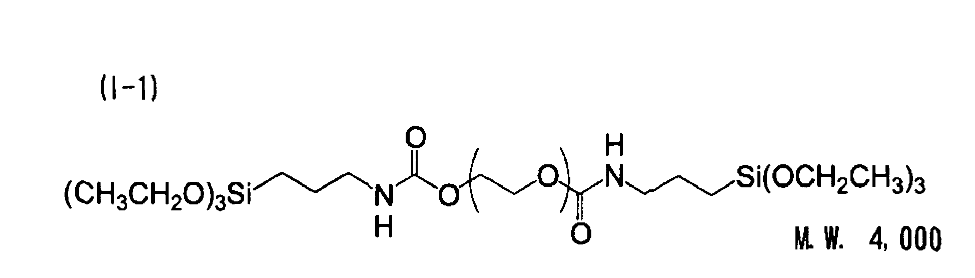

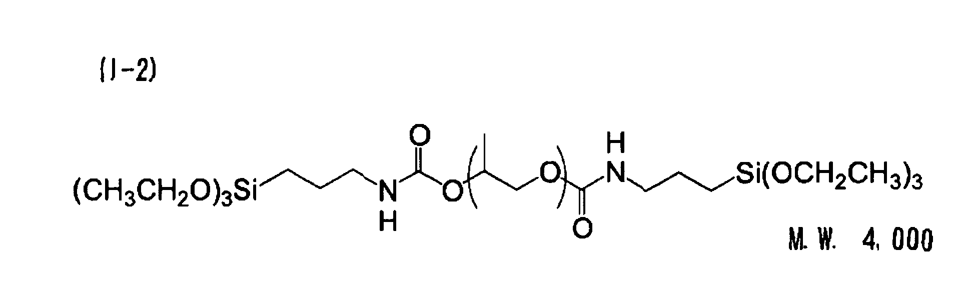

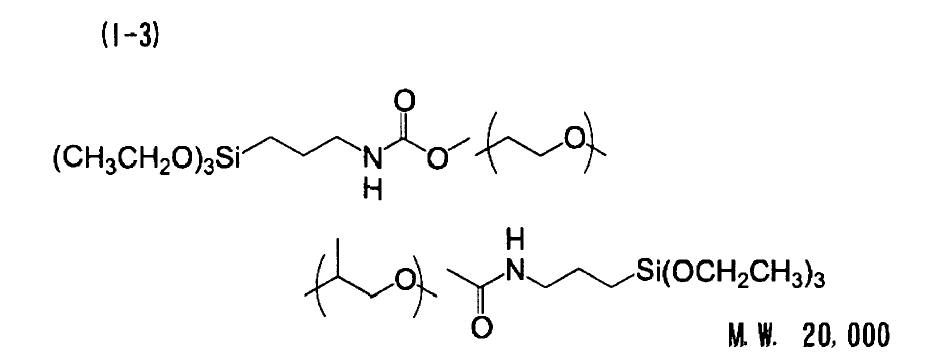

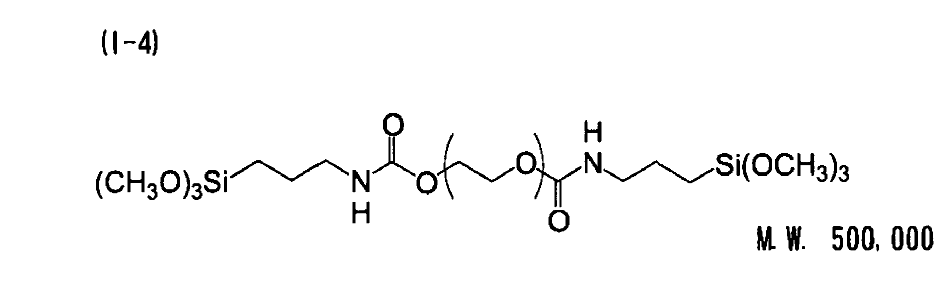

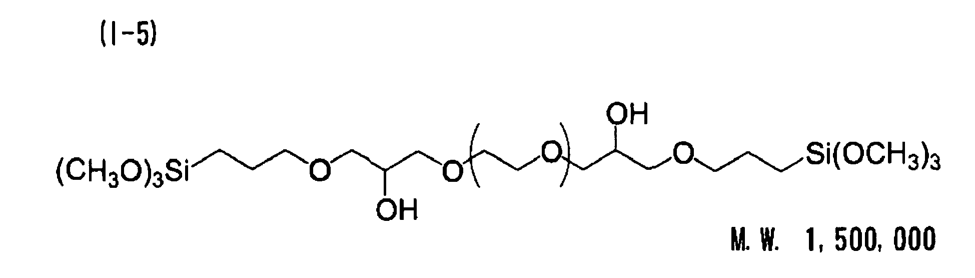

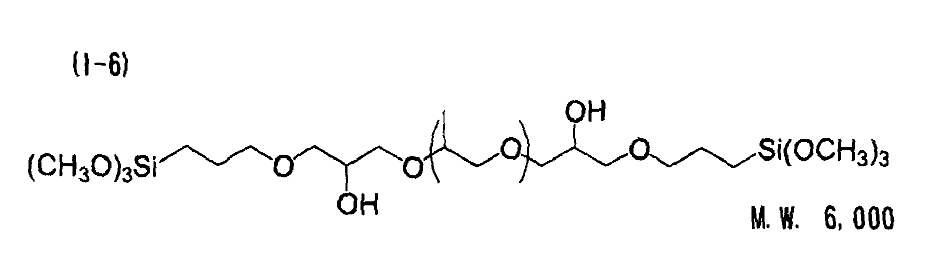

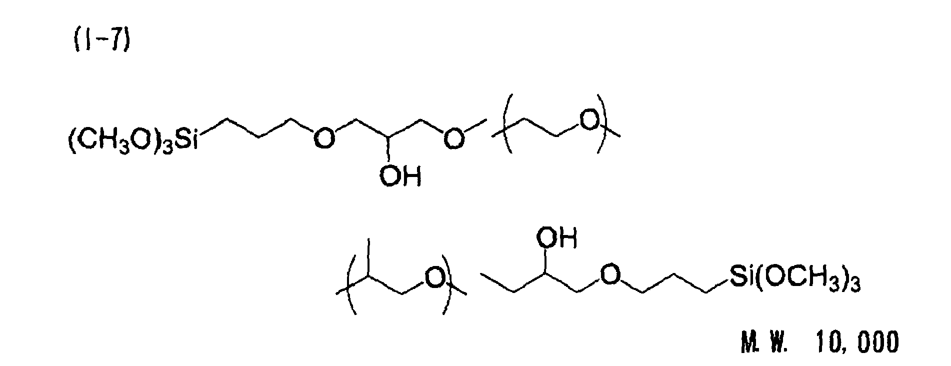

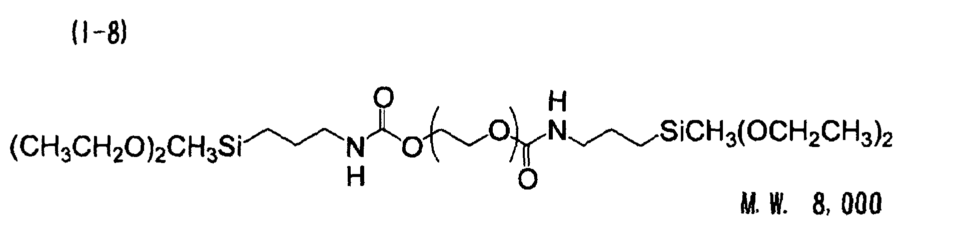

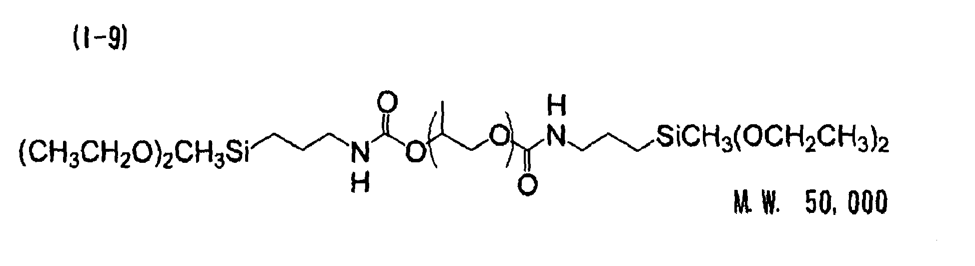

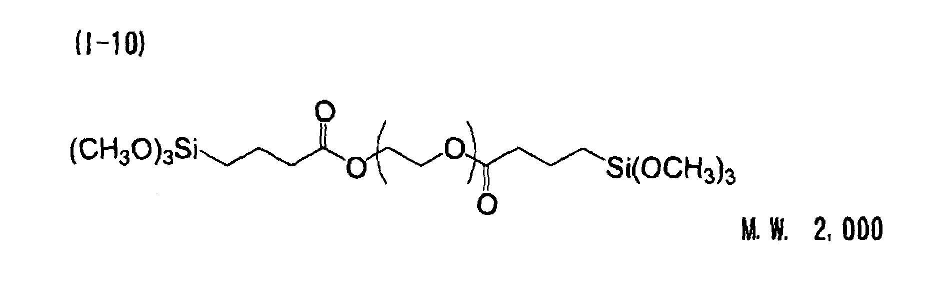

| | Terminal | Monomer (diisocyanate) | Monomer (diol) | Molecular weight |
|---|---|---|---|---|
| (I-11) | 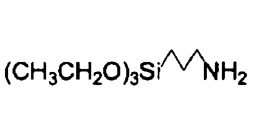 | 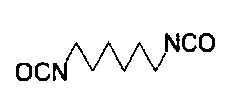 | 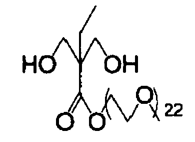 | 10,000 |
| (I-12) | 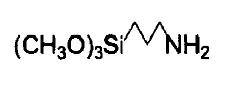 | 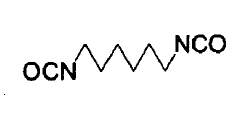 | 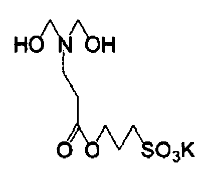 | 5,000 |
| (I-13) | 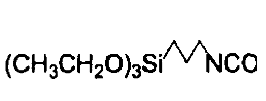 | 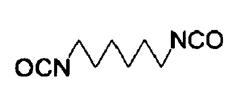 | 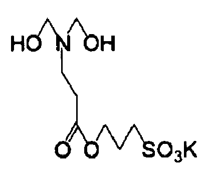 | 8.000 |
| (I-14) | 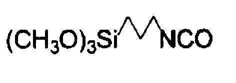 | 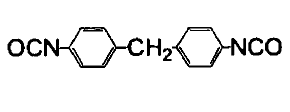 | 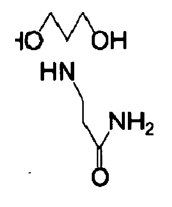 | 12,000 |
| (1-15) | 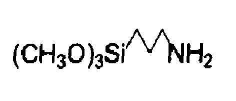 | 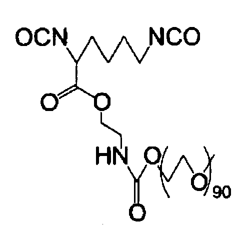 | 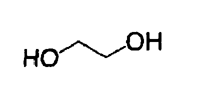 | 100,000 |
| (I-16) | 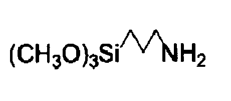 | 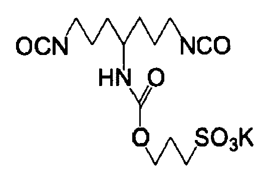 | 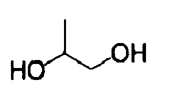 | 20,000 |
| (I-17) | 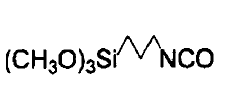 | 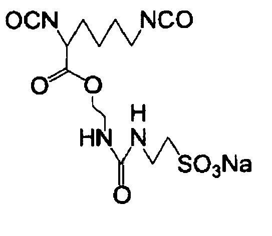 | 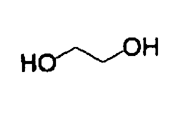 | 15,000 |
| (I-18) | 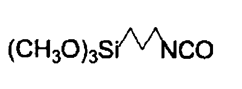 | 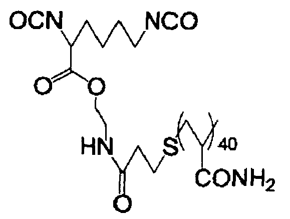 | 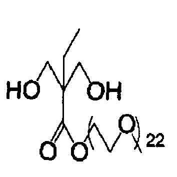 | 70,000 |
| (I-19) | 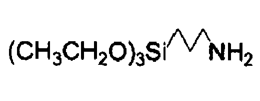 | 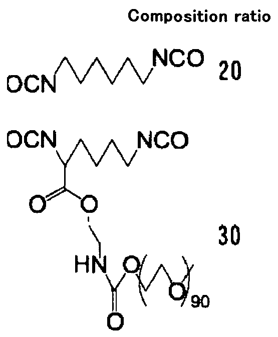 | 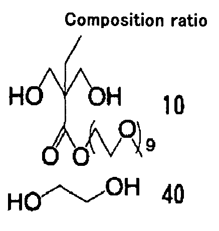 | 90,000 |
| (I-20) | 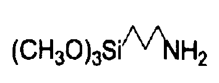 | 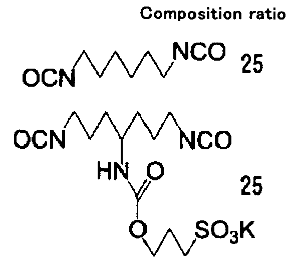 | 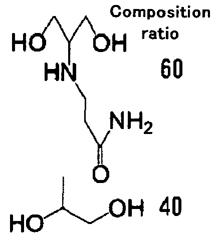 | 100,000 |
| (I-21) | 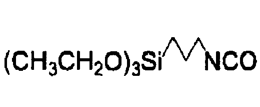 | 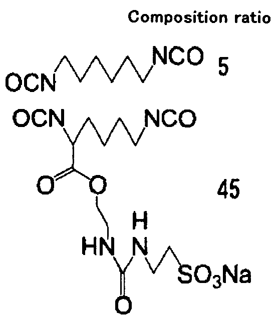 | 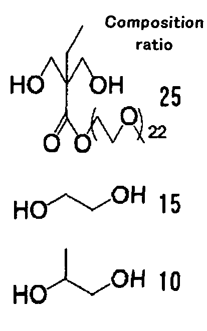 | 35,000 |
| (I-22) | 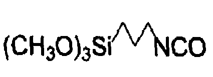 | 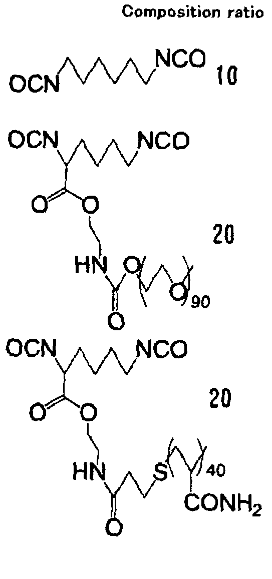 | 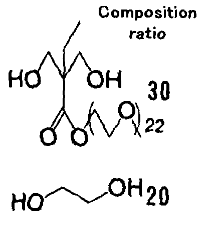 | 100,000 |
| (I-23) | 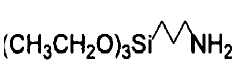 | 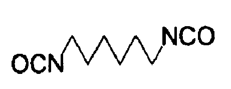 | 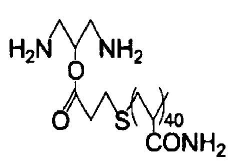 | 20,000 |
| (I-24) | 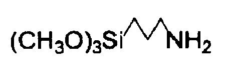 | 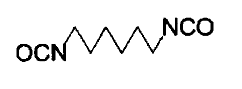 | 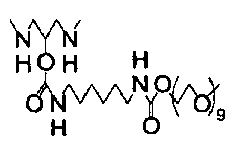 | 40,000 |
| (1-25) | 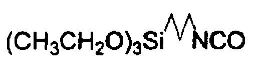 | 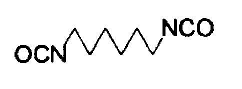 | 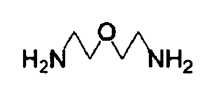 | 10,000 |
| (I-26) | 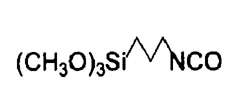 | 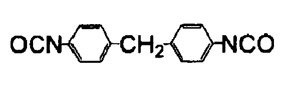 | 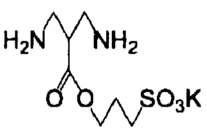 | 35,000 |
| (I-27) | 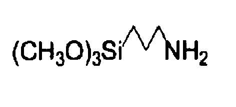 | 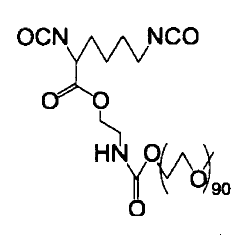 | 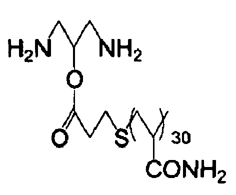 | 50,000 |
| (I-28) | 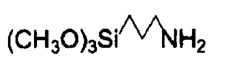 | 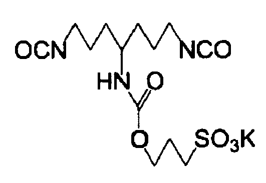 | 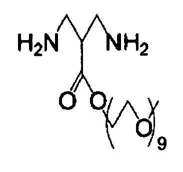 | 20,000 |
| (I-29) | 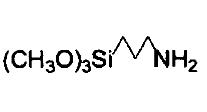 | 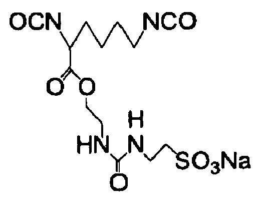 | 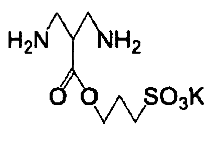 | 80,000 |
| (I-30) | 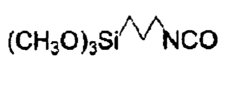 | 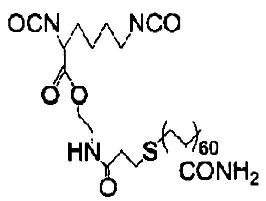 | 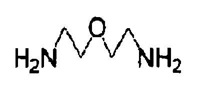 | 30,000 |
| (I-31) | 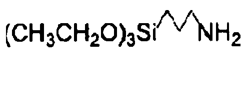 | 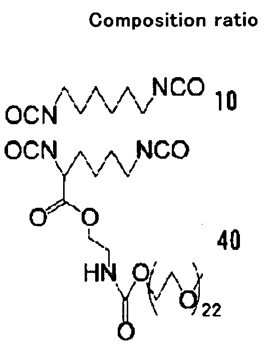 | 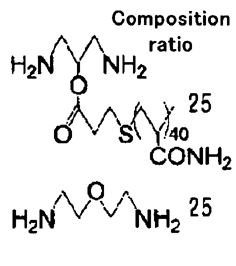 | 200,000 |
| (I-32) | 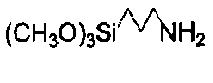 | 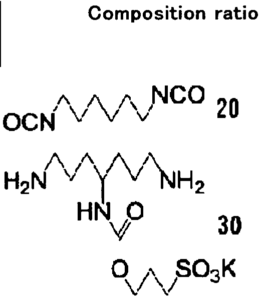 | 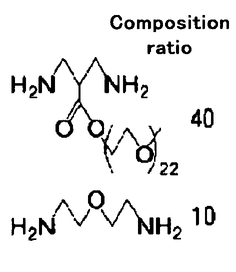 | 50,000 |
| (I-33) | 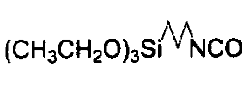 | 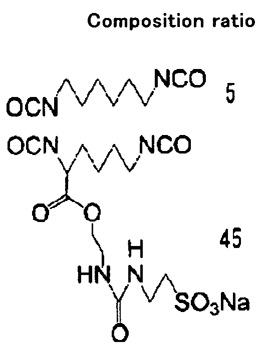 | 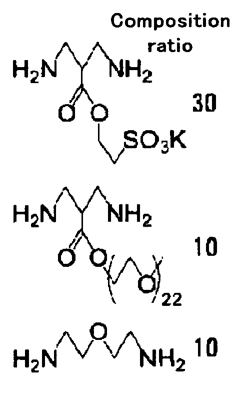 | 80,000 |
| (I-34) | 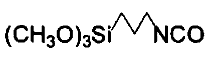 | 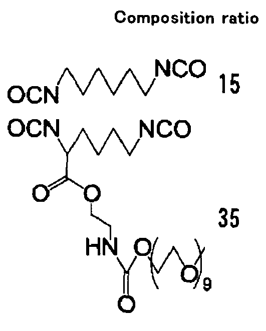 | 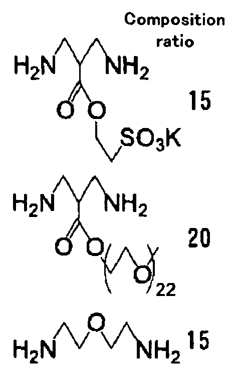 | 150,000 |

Next, specific examples of the structures represented by the Formula (II) [Exemplified compounds (II-1) to (II-34)] will be shown. Some of the exemplified compounds are shown by the monomers for forming the exemplified compounds (and the molar composition ratios) and the compounds to be introduced into the terminals of the copolymer obtained by polymerizing the monomers. Such exemplified compounds are formed by these monomers and compounds. Two compounds to be introduced into the terminals are mentioned, which shows that one compound is introduced into one terminal, and the other compound is introduced into the other terminal.

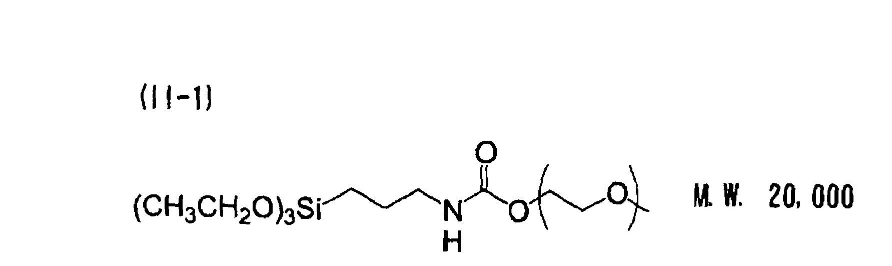

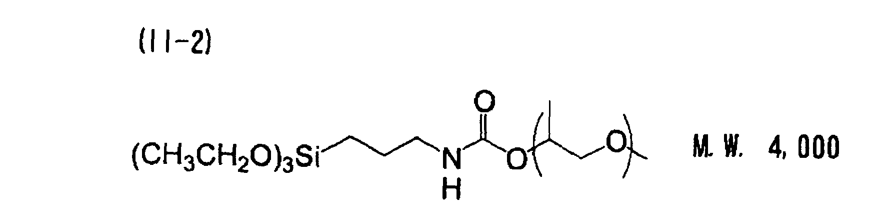

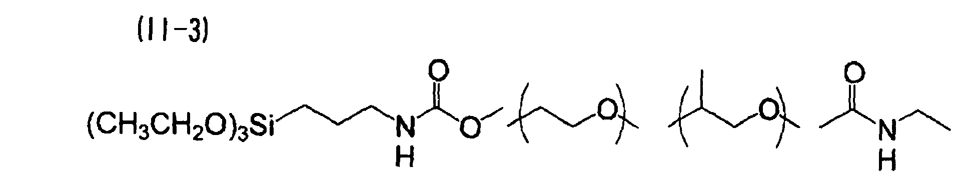

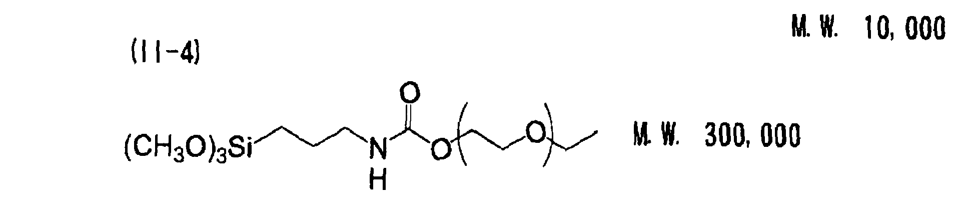

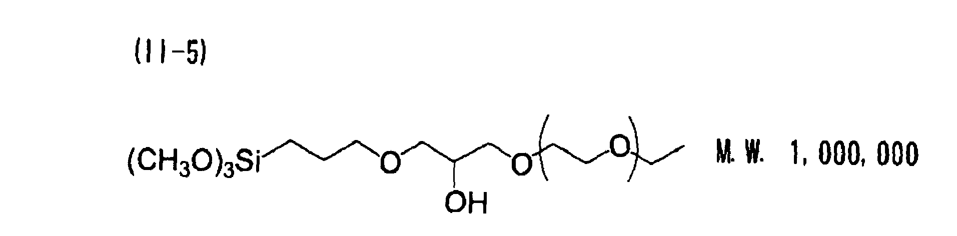

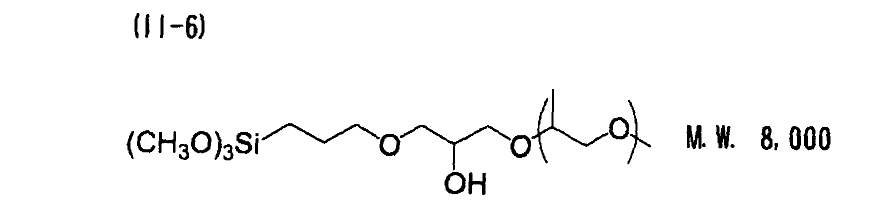

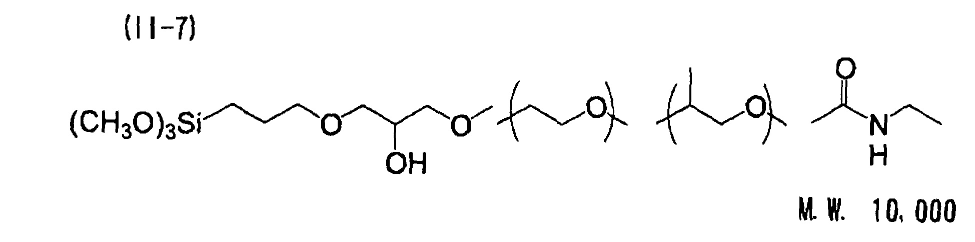

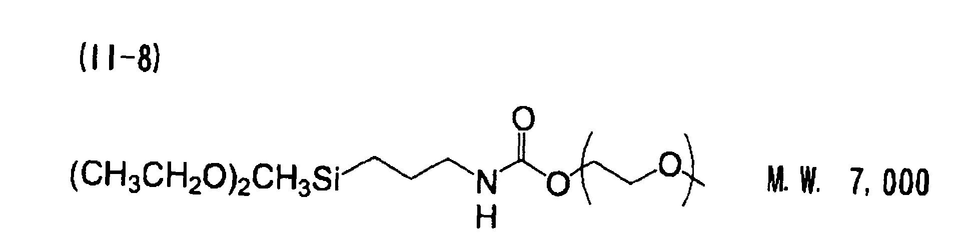

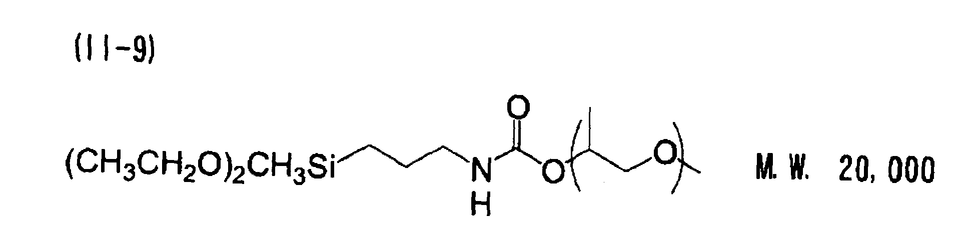

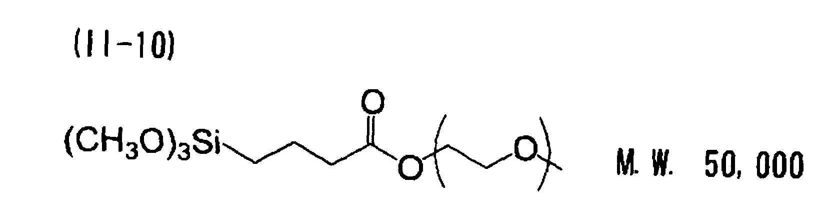

| | | | | |
|---|---|---|---|---|
| (II-11) | 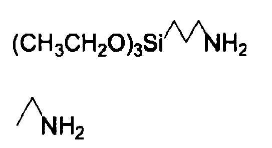 | 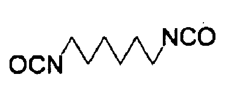 | 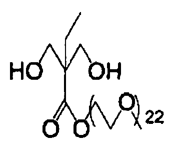 | 12,000 |
| (II-12) | 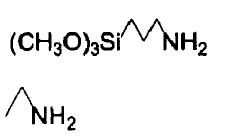 | 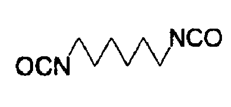 | 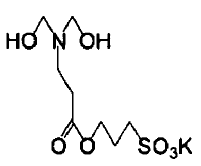 | 8,000 |
| (II-13) | 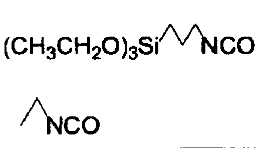 | 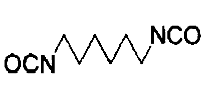 | 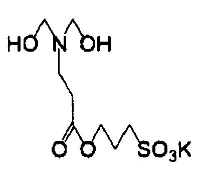 | 5,000 |
| (II-14) | 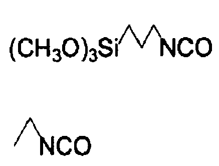 | 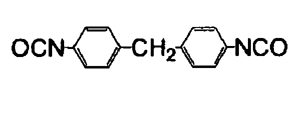 | 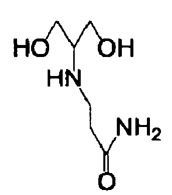 | 20,000 |
| (II-15) | 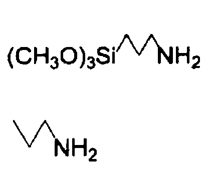 | 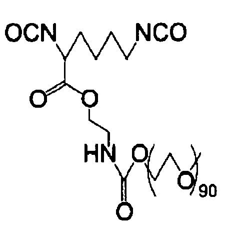 | 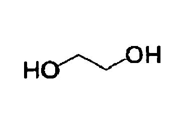 | 40,000 |
| (II-16) | 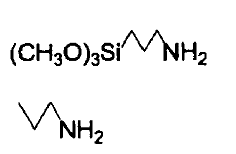 | 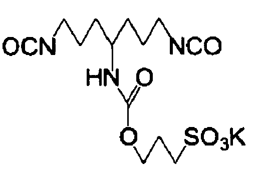 | 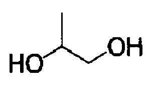 | 10,000 |
| (II-17) | 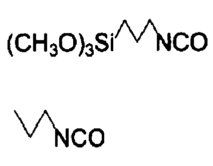 | 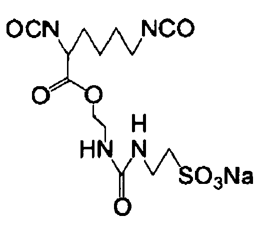 | 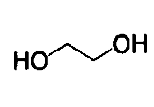 | 18,000 |
| (II-18) | 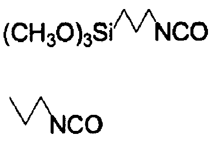 | 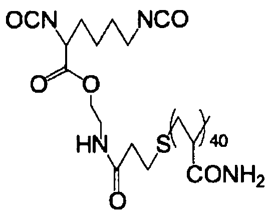 | 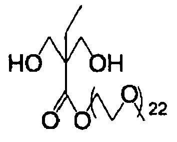 | 60,000 |
| (II-19) | 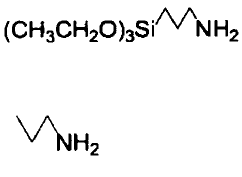 | 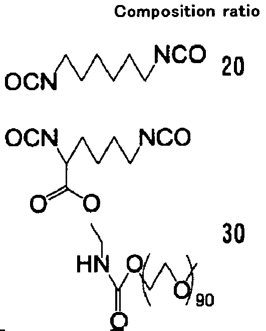 | 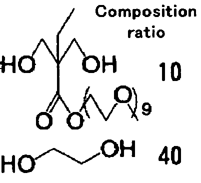 | 60,000 |
| (II-20) | 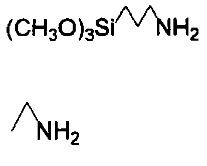 | 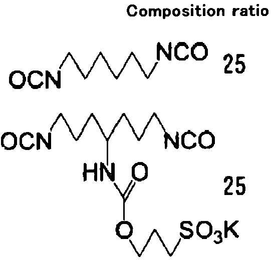 | 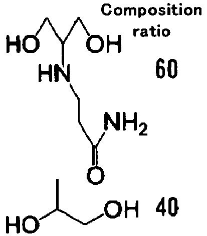 | 15,000 |
| (II-21) | 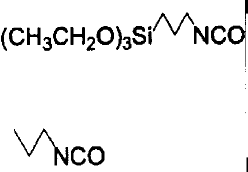 | 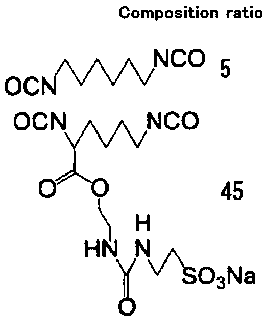 | 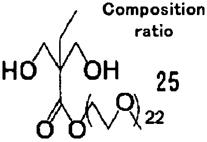 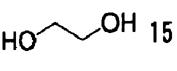 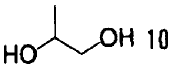 | 40,000 |
| (II-22) | 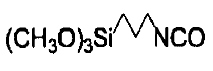 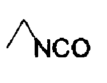 | 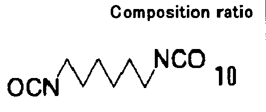 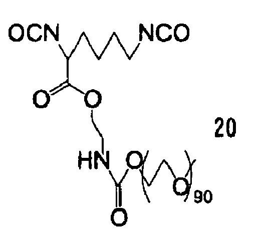 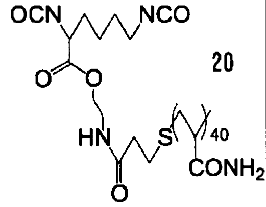 | 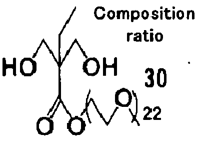 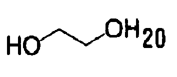 | 150,000 |
| (II-23) | 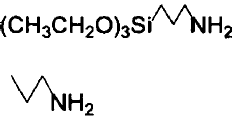 | 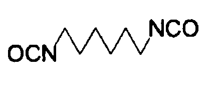 | 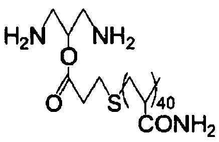 | 15,000 |
| (II-24) | 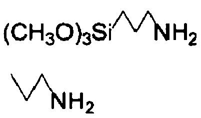 | 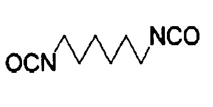 | 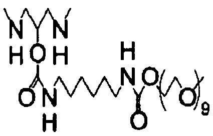 | 50,000 |
| (II-25) | 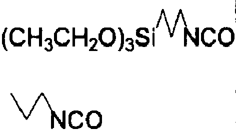 | 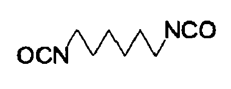 | 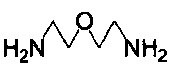 | 8,000 |
| (II-26) | 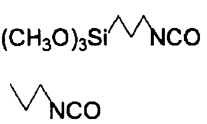 | 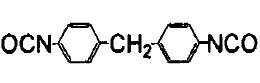 | 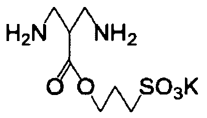 | 50,000 |
| (II-27) | 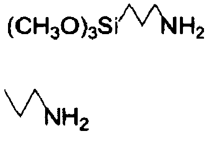 | 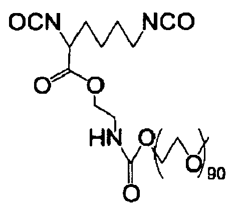 | 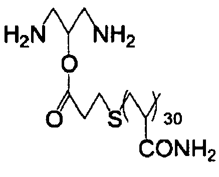 | 100,000 |
| (II-28) | 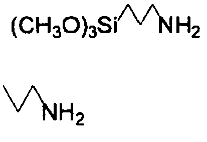 | 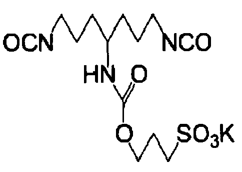 | 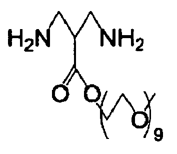 | 30,000 |
| (II-29) | 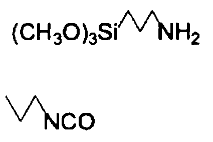 | 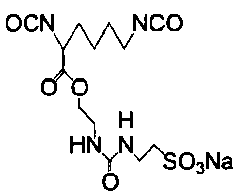 | 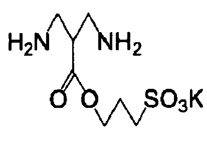 | 7,000 |
| (II-30) | 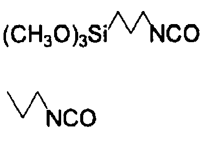 | 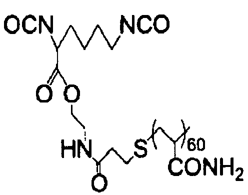 | 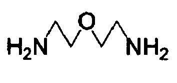 | 80,000 |
| (II-31) | 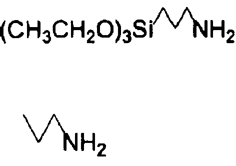 | 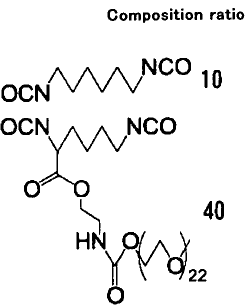 | 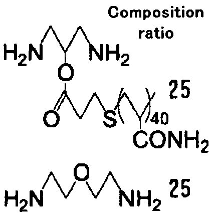 | 200,000 |
| (II-32) | 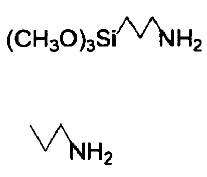 | 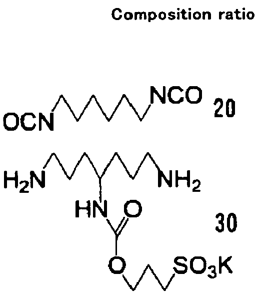 | 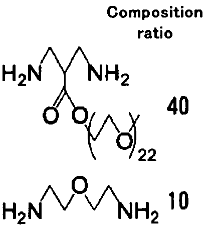 | 70,000 |
| (II-33) | 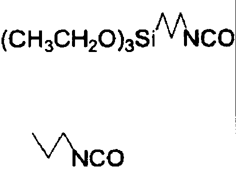 | 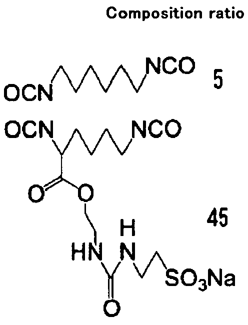 | 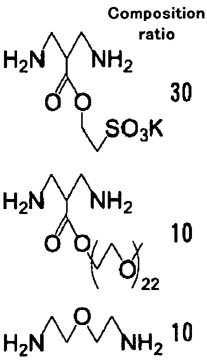 | 30,000 |
| (II-34) | 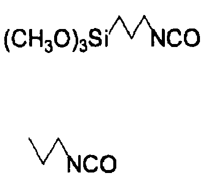 | 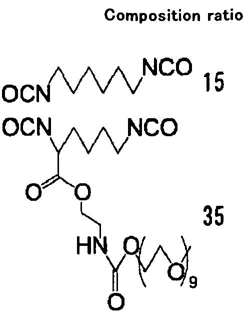 | 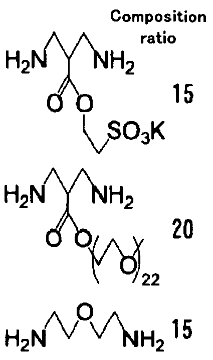 | 200,000 |

The specific organic silicon compound (a) of the invention is a novel compound and can be synthesized by means of, for example, the following method.

### (Synthesis Example: Synthesis of Organic Silicon Compound (I-1))

A 300 ml three-neck flask was charged with 30 g of polyethylene glycol, 2.05 g of 3-triethoxy silyl propyl isocyanate, 0.05 g of bismuth tris (2-ethyl hexanoate) and 150 g of tetrahydrofuran, and refluxed for 7 hours. It was put into 1.5 liter of hexane, and the resulting precipitated solid matter was filtered off and washed with hexane to obtain an organic silicon compound having a structure of the exemplified compound (I-1). The weight thereof after having been dried was 27.6 g.

It was confirmed by ¹H-NMR that the triethoxy silyl group (Si-OCH₂CH₃ ; 3.5 ppm) was introduced into both of the terminals. The weight average molecular weight of the polymer as measured by means of GPC (with polyethylene oxide as a reference) was 4,000.

Other compounds represented by the Formula (I) can also be synthesized in the same manner by selecting the structural unit (monomer) for forming the polymer or oligomer which corresponds to A and the alkoxy silyl group to be introduced into the terminals.

### (Synthesis Example: Synthesis of Organic Silicon Compound (II-24))

A 500 ml three-neck flask was charged with 10.0 g of diisocyanate as shown below, 37.7 g of diamine as shown below, 0.05 g of bismuth tris (2-ethyl hexanoate) and 200 g of tetrahydrofuran, and refluxed for 7 hours. Thereafter 1.0 g of diisocyanate was further added thereto and refluxed for 7 hours. Thereafter 4.5 g of 3-aminopropyl triethoxy silane and 1.2 g of amino propane were added thereto and the resulting mixture was stirred for 6 hours at room temperature. Then it was put into 1.5 liter of ethyl acetate, the resulting precipitated solid matter was filtered off and washed with ethyl acetate to obtain an organic silicon compound having a structure of the exemplified compound (II-24). The weight thereof after having been dried was 39.5 g.

It was confirmed by ¹H-NMR that the triethoxy silyl group (Si-OCH₂CH₃; 3.5 ppm) was introduced into one of the terminals. The weight average molecular weight of the polymer as measured by means of GPC (with polyethylene oxide as a reference) was 50,000.

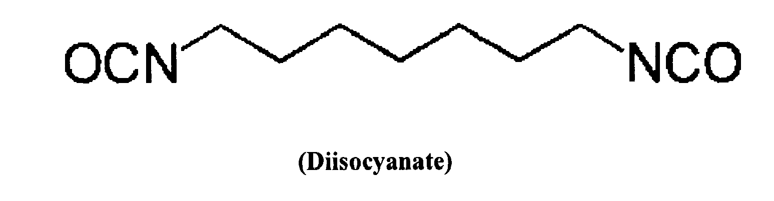

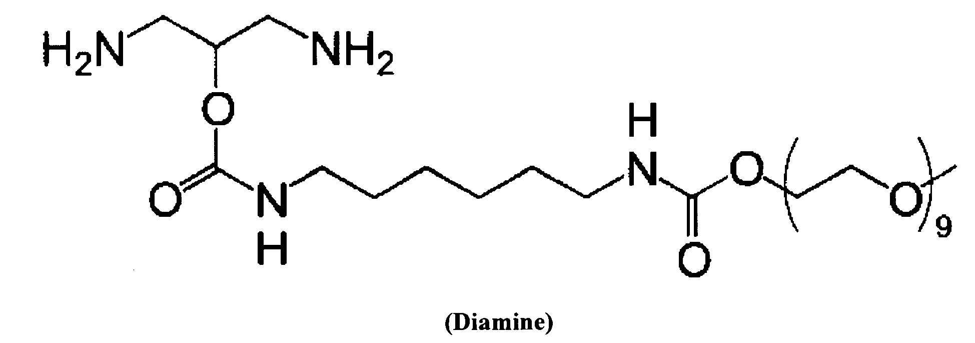

Other compounds represented by the Formula (II) can also be synthesized in the same manner by selecting the structural unit (monomer) for forming the polymer or oligomer which corresponds to B and the alkoxy silyl group to be introduced into the terminals.

### [Hydrophilic Composition]

The hydrophilic composition of the invention contains the above-mentioned specific organic silicon compound (a) of the invention and an alkoxide (b) of the element selected from the group consisting of Si, Ti, Zr and Al to be described later. It is possible that this hydrophilic composition is coated on a suitable substrate to form a coating and the coating is dried, preferably heated and dried, to form a hydrophilic coating having a crosslinked structure formed by hydrolysis and poly-condensation of the alkoxide of the element selected from the group consisting of Si, Ti, Zr and Al, with the organic silicon compound.

Among the alkoxides (b) of the element selected from the group consisting of Si, Ti, Zr and Al, an alkoxide of Si is preferred from the viewpoint of the reactivity and easy availability, and to be more specific, a compound for use as a silane coupling agent is preferably used.

A crosslinked structure formed by hydrolysis and poly-condensation of alkoxide as mentioned above may be hereinafter referred to as "a sol-gel crosslinked structure" in the invention, for convenience's sake.

The hydrophilic composition of the invention contains the specific organic silicon compound (a) of the invention. It is possible to use it alone or to use two or more kinds thereof in combination.

The specific organic silicon compound (a) of the invention is contained preferably in the range of 5 to 95 percent by mass, more preferably in the range of 15 to 90 percent by mass and most preferably in the range of 20 to 85 percent by mass, from the viewpoint of curability and hydrophilicity, based on the mass of the non-volatile components of the hydrophilic composition of the invention.

Components other than the specific organic silicon compound (a) which are contained in the hydrophilic composition of the invention will be explained.

### [Alkoxide Compound (b) of the element selected from the group consisting of Si, Ti, Zr and Al]

The alkoxide compound of the element selected from the group consisting of Si, Ti, Zr and Al to be used in the invention has a polymerizable functional group in the structure thereof, and is a hydrolytically polymerizable compound which may function as a crosslinking agent, and is polycondensed with the specific organic silicon compound (a) to form a strong coating having a crosslinked structure.

The alkoxide compound (b) to be used in the invention is preferably a compound represented by the following Formula (III). When the crosslinked structure is formed, in order to cure the hydrophilic coating, the organic silicon compound (a) and the alkoxide compound (b) represented by Formula (III) may be mixed together, coated on the surface of a substrate, and heated and dried.

**Formula (III)** (R⁸)ₖ-X-(OR⁹)₄₋ₖ

In the formula (III), R⁸ represents a hydrogen atom, an alkyl group, or an aryl group. R⁹ represents an alkyl group or an aryl group. X represents Si, Al, Ti, or Zr. k represents an integer from 0 to 2. The number of carbon atoms in a case where R⁸ and R⁹ each represent an alkyl group is preferably from 1 to 4. The alkyl group or aryl group may have a substituent. Examples of the substituent that can be introduced include a halogen atom, an amino group, a mercapto group, etc. The compound is preferably a low molecular weight compound having a molecular weight of 1,000 or less.

While specific examples of the alkoxide represented by the formula (III) are shown below, the invention is not restricted to them. In a case of examples where X is Si, that is, examples of alkoxides containing silicon include trimethoxy silane, triethoxy silane, tripropoxy silane, tetramethoxy silane, tetraethoxy silane, tetrapropoxy silane, methyl trimethoxy silane, ethyl triethoxy silane, propyl trimethoxy silane, methyl triethoxy silane, ethyl triethoxy silane, propyl triethoxy silane, dimethyl dimethoxy silane, diethyl diethoxy silane, γ-chloropropyl triethoxy silane, γ-mercaptopropyl trimethoxy silane, γ-mercaptopropyl triethoxy silane, γ-aminopropyl triethoxy silane, phenyl trimethoxy silane, phenyl triethoxy silane, phenyl tripropoxy silane, diphenyl dimethoxy silane, and diphenyl diethoxy silane. Among them, particularly preferred examples include tetramethoxy silane, tetraethoxy silane, methyltrimethoxy silane, ethyltrimethoxy silane, methyltriethoxy silane, ethyl triethoxy silane, dimethyl diethoxy silane, phenyl trimethoxy silane, phenyl triethoxy silane, diphenyl dimethoxy silane, diphenyl diethoxy silane, etc.

In a case of examples where X is Al, that is, examples of alkoxides containing aluminum include trimethoxy aluminate, triethoxy aluminate, tripropoxy aluminate, and tetraethoxy aluminate.

In a case of examples where X is Ti, that is, examples of alkoxides containing titanium include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate, and phenyltriethoxy titanate.

In a case of examples where X is Zr, that is, examples of alkoxides containing zirconium include zirconates corresponding to the compounds exemplified as those containing titanium.

Among them, alkoxides in which X is Si are preferred from a view point of coatability.

The alkoxide compound (b) according to the invention may be used alone or in combination of two or more kinds therof.

The alkoxide compound (b) may be used as a non-volatile component in the hydrophilic composition of the invention within a range preferably from 5 to 80 mass%, and more preferably from 10 to 70 mass%.

### [(c) Catalyst]

In the hydrophilic composition of the invention, the specific organic silicon compound (a) and a crosslinking component such as the alkoxide compound (b) of the element selected from the group consisting of Si, Ti, Zr and Al may be at first dissolved in a solvent and stirred thoroughly, whereby these components are hydrolyzed and polycondensed to form an organic-inorganic composite sol liquid. Then, using the sol liquid, a hydrophilic coating having high hydrophilicity and high film strength may be formed. In the preparation of the organic-inorganic composite sol liquid, catalyst (c) for promoting the reaction of the organic silicon compound (a) and the alkoxide compound (b), such as an acidic catalyst or a basic catalyst, is preferably used together for promoting the hydrolysis and the polycondensation reaction. In a case of intending to obtain a high reaction efficiency that is appropriate for a practical use, such a catalyst is particularly preferably used.

As the catalyst (c) used in the invention, a catalyst that promotes the reaction of hydrolyzing and polycondensating the alkoxide compound and forming a bond with the organic silicon compound may be selected. Specifically, an acidic or basic compound may be used as it is, or an acidic or basic compound may used after being dissolved in a solvent such as water or alcohol (hereinafter they may be referred to as an acidic catalyst or a basic catalyst). The concentration when the acidic or basic compound is dissolved in a solvent is not particularly restricted and may be selected appropriately in accordance with the characteristics of the acidic or basic compound used, a desired content of the catalyst, etc. In a case where the concentration of the acidic or basic compound constituting the catalyst is high, the rate of hydrolysis and polycondensation tends to increase. However, in a case of using a basic catalyst at a high concentration, precipitates are sometimes formed in the sol liquid. Therefore, in a case of using a basic catalyst, the concentration is preferably 1N or less based on a concentration in an aqueous solution.

There is no particular restriction on the kind of the acidic catalyst or the basic catalyst. In a case where it is necessary to use a catalyst at high concentration, a catalyst that scarcely remains in the coating film after drying is preferred. Specific examples of such an acidic catalyst include hydrogen halide such as hydrochloric acid, nitric acid, sulfuric acid, sulfurous acid, hydrogen sulfide, perchloric acid, hydrogen peroxide, carbonic acid, carboxylic acid such as formic acid or acetic acid, a substituted carboxylic acid in which R in the structural formula represented by RCOOH is substituted with another element or substituent, and a sulfonic acid such as benzene sulfonic acid. Specific examples of such a basic catalyst include an ammoniacal base such as aqueous ammonia, and an amine such as ethylamine or aniline. Examples of other catalysts include a metal compound such as acetyl acetonate complex of Ti, SnCl₄, and Zr(OR)₄.

The catalyst according to the invention may be used as a non-volatile component in the hydrophilic composition of the invention within a range, preferably, from 0 to 50 mass% and, more preferably, from 5 to 25 mass%. Further, the catalyst (c) may be used alone or two or more kinds of them may be used in combination.

In the hydrophilic composition of the invention, various compounds can be used together in accordance with the purpose in addition to the organic silicon compound (a) and alkoxide compound (b) as essential components, and the catalyst (c) optionally used together, so long as they do not impair the effect of the invention. The components that can be used together will describe below.

### [Surfactant]

In the invention, a surfactant is preferably used for improving the film surface state of the hydrophilic composition. Examples of the surfactant include nonionic surfactants, anionic surfactants, cationic surfactants, amphoteric surfactants and fluoro surfactants.

The nonionic surfactants used in the invention are not particularly restricted and those known so far can be used. Examples include polyoxyethylene alkyl ethers, polyoxyethylene alkyl phenyl ethers, polyoxyethylene polystylyl phenyl ethers, polyoxyethylene polyoxypropylene alkyl ethers, glycerine fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerine fatty acid partial esters, polyoxyethylenated castor oils, polyoxyethylene glycerin fatty acid partial esters, fatty acid diethanol amides, N,N-bis-2-hydroxyalkylamines, polyoxyethylene alkylamine, triethanolamine fatty acid ester, trialkylamine oxide, polyethylene glycol, and a copolymer of polyethylene glycol and polypropylene glycol.

The anionic surfactants used in the invention are not particularly restricted and those known so far can be used. Examples include fatty acid salts, abietic acid salts, hydroxyl alkane sulfonic acid salts, alkane sulfonic acid salts, dialkylsulfo succinate ester salts, linear alkyl benzene sulfonic acid salts, branched alkyl benzene sulfonic acid salts, alkyl naphthalene sulfonic acid salts, alkylphenoxy polyoxyethylene propyl sulfonic acid salts, polyoxyethylene alkylsulfophenyl ether salts, sodium salt of N-methyl-N-oleyl taurate, disodium salt of N-alkyl sulfo succinic acid monoamide, petroleum sulfonate salt, sulfated tallow oil, sulfate ester salts of fatty acid alkyl ester, alkyl sulfate ester salts, polyoxyethylene alkyl ether sulfate ester salts, fatty acid monoglyceride sulfate ester salts, polyoxyethylene alkylphenyl ether sulfate ester salts, polyoxyethylene stylylphenyl ether sulfate ester salts, alkyl phosphate ester salts, polyoxyethylene alkyl ether phosphate ester salts, polyoxyethylene alkylphenyl ether phosphate ester salts, partial saponified products of styrene/maleic acid anhydride copolymer, partial saponified products of olefin/maleic acid anhydride copolymer, and formalin condensates of naphthalene sulfonic acid salt.

The cationic surfactants used in the invention are not particularly restricted and those known so far can be used. Examples include alkylamine salts, quaternary ammonium salts, polyoxyethylene alkyl amine salts, and polyethylene polyamide derivatives.

The amphoteric surfactants used in the invention are not particularly restricted and those known so far can be used. Examples include caroboxy betains, amino carboxylic acids, sulfobetains, amino sulfate esters, and imidazolines.

In the surfactants described above, "polyoxyethylene" may also be "polyoxyalkylene" such as polyoxymethylene, polyoxypropylene, polyoxybutylene, and such surfactants may also be used in the invention.

Examples of further preferred surfactants include fluoro surfactants containing perfluoroalkyl groups in the molecule. Examples of such fluoro-surfactants include anion types such as perfluoroalkyl carboxylic acid salt, perfluoroalkyl sulfonic acid salt, and perfluoroalkyl phosphate esters; amphoteric type such as perfouoroalkyl betain; cationic type such as perfluoroalkyl trimethyl ammonium salt; and nonion type such as perfluoroalkyl amine oxide, perfluoroalkyl ethylene oxide adduct, oligomers containing perfluoroalkyl group and hydrophilic group, oligomers containing perfluoroalkyl group and oleophilic group, oligomers containing perfluoroalkyl group, hydrophilic group, and oleophilic group, and urethanes containing perfluoroalkyl groups and oleophilic groups. Further, examples also include fluoro-surfactants as described in each of the publications of JP-A Nos. 62-170950, 62-226143, and 60-168144.

The surfactant may be used as a non-volatile component in the hydrophilic composition of the invention within a range, preferably, from 0.001 to 10 mass% and, more preferably, from 0.01 to 5 mass%. The surfactants may be used alone or two or more of them may be used in combination.

### [Inorganic particles]

The hydrophilic composition of the invention may also contain inorganic particles for improving the cured film strength and hydrophilicity of the formed hydrophilic coating. Preferable examples of the inorganic particles include silica, alumina, magnesium oxide, titanium oxide, magnesium carbonate, calcium alginate, and a mixture thereof.

The inorganic particles have an average particle diameter, preferably, from 5 nm to 10 µm and, more preferably, from 0.5 to 3 µm. Within the range described above, the particles are stably dispersed in the hydrophilic layer and can sufficiently maintain the strength of the layer to form a film of excellent hydrophilicity. The inorganic particles described above are easily available as commercial products such as colloidal silica dispersions.

The inorganic particles according to the invention may be used as a non-volatile component in the hydrophilic composition of the invention within a range, preferably, 20 mass% or less and, more preferably, 10mass% or less. The inorganic particles may be used alone or two or more kinds of them may be used in combination.

### [Preparation of hydrophilic composition]

The hydrophilic composition can be prepared by dissolving the organic silicon compound and the alkoxide compound in a solvent such as ethanol, then adding the catalyst described above and stirring them. It is preferred that the reaction temperature is from room temperature to 80°C and the reaction time, that is, the time for continuing stirring is preferably within a range from 1 to 72 hours. Hydrolysis and polycondensation of both of the components can be proceded by the stirring to obtain an organic-inorganic composite sol liquid.

There is no particular restriction for the solvent used in preparation of the hydrophilic composition containing the organic silicon compound and the alkoxide compound, so long as the solvent can uniformly dissolve or disperse them. For example, an aqueous solvent such as methanol, ethanol, or water is preferred.

As described above, a sol-gel method may be utilized for the preparation of the organic-inorganic composite sol liquid (hydrophilic composition) for forming the hydrophilic coating of the hydrophilic composition of the invention. The sol-gel method is specifically described, for example, in books such as "Science for Sol-Gel Method" written by Sumio Sakuhana, published fromAGNE Shofusha Co. (1988), "Functional Thin Film Preparation Technique by Modem Sol-Gel Method" written by Ken Hirashima, published from Sogo Gijutsu center (1992), etc. and the method described in them can be applied to the preparation of the hydrophilic composition in the invention.

### [Hydrophilic member]

The hydrophilic member of the invention can be obtained by coating a solution containing the hydrophilic composition of the invention as described above on an appropriate support and drying to form a hydrophilic coating. That is, the hydrophilic member of the invention has a hydrophilic coating formed by coating the hydrophilic composition of the invention on a support and heating and drying the same.

In the formation of the hydrophilic coating, heating and drying after coating the solution containing the hydrophilic composition are conducted under the conditions, preferably, at a temperature within a range from 50 to 200°C for a time of about 2 min to one hour and, more preferably, at a temperature within a range from 80 to 160°C for a time of 5 to 30 min from a viewpoint of efficiently forming the crosslinked structure at high density. Further, known means, for example, a drying machine having a temperature control function is preferably used as heating means.

### [Substrate]

For the substrate that can be used as a support for the hydrophilic member of the invention, as a transparent substrate intended for anti-staining and/or anti-fogging effect, for instance, substrates capable of permitting a visible light to transmit therethrough such as inorganic substrates, for example, glass or glass containing an inorganic compound layer, or a transparent plastic, or a transparent plastic layer containing an inorganic compound layer can be utilized suitably.

Referring specifically to the inorganic substrates, examples include usual glass plates, laminated glass plates containing a resin layer, gas layer, vacuum layer, or the like, and various kinds of glass plates containing reinforcing components or colorants.

Examples of the glass plates containing an inorganic compound layer include glass plates having an inorganic compound layer formed, for example, of metal oxides such as silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, and ITO (Indium Tin Oxide); metal halides such as magnesium fluoride, calcium fluoride, lanthanum fluoride, cerium fluoride, lithium fluoride, and thorium fluoride.

The inorganic compound layer may have a single layered or a multi-layred structure. The inorganic compound layer can maintain the optical transmittance by the thickness thereof. Further, the layer can also function as an anti-reflective layer. For the method of forming the inorganic compound layer, known methods can be applied. Examples thereof include coating method such as dip coating, spin coating, flow coating, spray coating, roll coating, and gravure coating, physical vapor deposition methods (PVD) such as vacuum vapor deposition, reactive vapor deposition, ion beam assisted method, sputtering, and ion plating, and gas phase methods such as chemical vapor deposition (CVD).

Further, among the organic substrates such as made of plastics, examples of transparent plastic substrates include substrates comprising various plastic materials having visible light permeability. In particular, substrates used for optical members are selected while considering optical characteristics such as transparency, refractive index, and dispersibility. Then, they are selected depending on the purpose of use while considering various physical properties including strength, for example, impact resistance and flexibility, and heat resistance, weather resistance, and durability. Preferable examples of materials include polyolefin resins such as polyethylene and polypropylene, polyester resins such as polyethylene terephthalate and polyethylene naphthalate, polyamide resins, polystyrene, polyvinyl chloride, polyimide, polyvinyl alcohol, ethylene vinyl alcohol, acrylic resin, and cellulosic resins such as triacetyl cellulose, diacetyl cellulose, and cellophane. Depending on the purpose of use, they may be used alone or two or more of them may be used in combination in the form of mixture, copolymer, or laminate.

As the plastic substrate, those in which an inorganic compound layer described in the explanation of the glass plate is formed on a plastic plate may also be used. In this case, the inorganic compound layer can also function as an anti-reflective layer. Also in a case of forming the inorganic compound layer on a plastic plate, it can be formed by the same method as described above for the inorganic substrate.

In a case of forming the inorganic compound layer on a transparent plastic substrate, a hard coat layer may be formed between both of the layers. Since the hardness of the substrate surface is improved and the substrate surface is smoothed by the provision of the hard coat layer, adhesion between the transparent plastic substrate and inorganic compound layer is improved, the scratch resistance can be improved, and occurrence of cracks on the inorganic compound layer caused by bending of the substrate can be suppressed. By the use of such a substrate, mechanical strength of the hydrophilic member can be improved. The material of the hard coat layer is not particularly restricted so long as it has transparency, appropriate strength, and mechanical strength. For example, resins curable by the irradiation of ionization radiation or UV-rays or thermosetting resins can be used. In particular, UV-ray curable acrylic resin, organic silicon resins and heat setting polysiloxane resin is preferred. It is more preferred that the refractive index of the resins described above is equal to or approximate to the refractive index of the transparent plastic substrate.

The method of forming the hard coat layer as described above is not particularly restricted and an any method can be adopted so long as the layer can be coated uniformly. Further, while the hard coat layer has a sufficient strength so long as the film thickness is 3 µm or more, it is preferably within a range from 5 to 7 µm in view of the transparency, coating accuracy, and handleability. Furthermore, by mixing and dispersing inorganic particles or organic particles within an average particle diameter of from 0.01 to 3 µm in the hard coat layer, a light diffusing treatment generally referred to as anti-glaring treatment can be applied. There is no particular restriction on the particles so long as they are transparent, materials of low refractive index are preferred, and silicon oxide and magnesium fluoride are particularly preferred in view of the stability, heat resistance, etc. The light diffusing treatment can be attained also by disposing unevenness to the surface of the hard coat layer.

As described above, the hydrophilic member of the invention can be obtained by using a glass plate or plastic plate having an inorganic compound layer as a substrate and forming a hydrophilic surface. Since the hydrophilic member has a hydrophilic coating excellent in hydrophilicity and durability on the surface, it can provide excellent anti-staining property, particularly, anti-staining property to oil and fat and/or anti-fogging property to the surface of the support (substrate).

The anti-reflective layer applicable to the surface of the hydrophilic member of the invention is not restricted to the inorganic compound layer described above. For example, a known anti-reflective layer capable of attaining an anti-reflective effect by laminating a plurality of thin films of different reflectivity and refractive index can also be used optionally. Also for the material, either inorganic compounds and/or organic compounds can be used. In particular, a substrate having at the surface thereof an inorganic compound layer as the anti-reflective film can provide an anti-staining and/or anti-fogging member of the invention excellent in anti-staining and/or anti-fogging function and further anti-reflective property at the surface when applying the hydrophilic polymer chain according to the invention onto the surface at the side where the anti-reflective film is formed. Further, anti-reflective optical functional members having various functions and characteristics can also be obtained using the hydrophilic member of the invention when bonding a functional optical member such as a polarization plate to the member having the configuration described above by means of a bonding technique such as lamination depending on the purpose.

By bonding such an anti-reflective member or anti-reflective optical functional member using a pressure sensitive adhesive or an adhesive to a glass plate, plastic plate or polarization plate of a front screen plate in various display devices (liquid crystal display, CRT display, projection display, plasma display, EL display, etc.), the anti-reflective member can be applied to the display apparatus.

Further, the hydrophilic member of the invention can be applied to various uses that require anti-staining and/or anti-fogging effect in addition to the display apparatus described above. In a case of application to a substrate when transparency is not necessary for the anti-staining and/or anti-fogging member, for example, metals, ceramics, woods, stones, cements, concretes, textiles, fibers, fabrics, combinations thereof or laminates thereof can also be used suitably as the support substrate, in addition to the transparent substrate described above.

Examples of fields to which the hydrophilic member of the invention can be applied and in which substrates capable of transmitting visible light can be applied include mirrors such as vehicle back mirrors, mirrors for bath rooms, mirrors for lavatories, dentist mirrors, and road mirrors, lenses such as spectacle lens, optical lens, camera lens, endoscope lens, illumination lens, lens for semiconductors, and lens for copiers; prisms, window glass for buildings and life guard towers; window glass for vehicles such as automobiles, railway vehicles, aircrafts, ships, submarine boats, snow cars, ropeway gondolas, play ground gondolas or spacecrafts; wind shield glass for vehicles such as automobiles, railway vehicles, aircrafts, ships, submarine boats, snow cars, snow mobiles, motorcycles, ropeway gondolas, playground gondolas and space ships; protective goggle, sports goggle, shield for protective mask, shield for sports masks, helmet shield, glass for frozen food display cases; cover glass for measuring instruments, and films to be attached on the surface of articles described above.

Examples of other applications include building materials, building exterior decoration, building interior decoration, window frame, window glass, structural member, vehicle exterior decoration and coating, exterior decoration for machineries and articles, dust-proof cover and coating, traffic signs, various display devices, advertising tower, road sound proof wall, railway sound proof wall, bridge beam, guard rail exterior decoration and coating, tunnel interior decoration and coating, insulators, solar cell cover, heat collection cover for solar cell water warmer, green house, cover of vehicle illumination light, residential facility, toilet, bath tab, wash stand, illumination instruments, illumination cover, kitchen goods, tablewares, dish washers, dish driers, kitchen sink, cooking range, kitchen hood, ventilation fan, and films to be bonded on the surface of the articles described above, housing, parts, exterior decoration, and coating of domestic electric products, housing, parts, exterior decoration, and coating for OA instrument products, as well as films to be bonded to the surface of the articles described above, and their application range is wide.

### EXAMPLES

The invention will be explained in detail according to Examples, but the scope of the invention should not be limited by these Examples.

### (Synthesis Example 1: Synthesis of the Organic Silicon Compound (I-1)

A 300 ml three-neck flask was charged with 30 g of polyethylene glycol, 2.05 g of 3-triethoxy silyl propyl isocyanate, 0.05 g of bismuth tris (2-ethyl hexanoate) and 150 g of tetrahydrofuran, and refluxed for 7 hours. The resulting mixture was put into 1.5 liter of hexane, and the resulting precipitated solid matter was filtered off and was washed with hexane to obtain an organic silicon compound having the structure of the exemplified compound (I-1). The weight thereof after having been dried was 27.6 g. It was confirmed by ¹H-NMR that the triethoxy silyl group (Si-OCH₂CH₃; 3.5 ppm) was introduced into the terminal. The weight average molecular weight of the polymer as measured by means of GPC (with polyethylene oxide as a reference) was 4,000.

### (Synthesis Example 2: Synthesis of the Organic Silicon Compound (I-2)

With the exception of replacing polyethylene glycol (30 g) in the Synthesis Example 1 with polypropylene glycol (40 g), the same operation was carried out to obtain the exemplified compound (I-2). The weight thereof after having been dried was 36.4 g. It was confirmed by ¹H-NMR that the triethoxy silyl group (Si-OCH₂CH₃; 3.5 ppm) was introduced into the terminal. The weight average molecular weight of the polymer as measured by means of GPC (with polyethylene oxide as a reference) was 4,000.

### (Synthesis Example 3: Synthesis of the Organic Silicon Compound (I-11)

A 500 ml three-neck flask was charged with 5.0 g of diisocyanate as shown below, 33.6 g of diol as shown below, and 0.05 g of bismuth tris (2-ethyl hexanoate) and 200 g of tetrahydrofuran, and refluxed for 7 hours. Next 1.0 g of diisocyanate was further added thereto, and refluxed for 7 hours. Thereafter 4.5 g of 3-aminopropyl triethoxy silane was added thereto and the resulting mixture was stirred for 6 hours at room temperature. The mixture was put into 1.5 liter of ethyl acetate, the resulting precipitated solid matter was filtered off and was washed with ethyl acetate, to obtain an organic silicon compound having the structure of the exemplified compound (I-11). The weight thereof after having been dried was 30.3 g. It was confirmed by ¹H-NMR that the triethoxy silyl group (Si-OCH₂CH₃; 3.5 ppm) was introduced into the terminal. The weight average molecular weight of the polymer as measured by means of GPC (with polyethylene oxide as a reference) was 10,000.

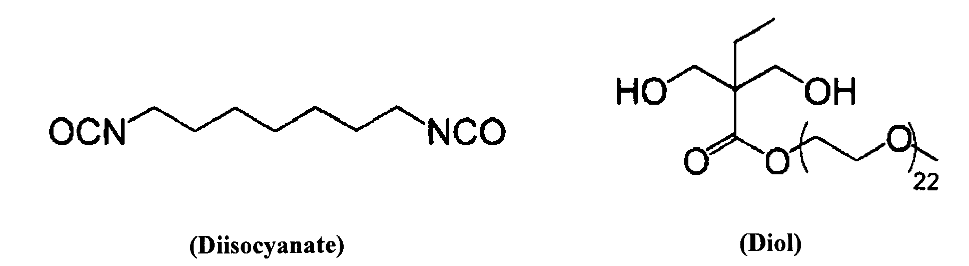

### (Synthesis Example 4: Synthesis of the Organic Silicon Compound (II-24)

A 500 ml three-neck flask was charged with 10.0 g of diisocyanate as shown below, 37.7 g of diamine as shown below, and 0.05 g of bismuth tris (2-ethyl hexanoate) and 200 g of tetrahydrofuran, and refluxed for 7 hours. Next 1.0 g of diisocyanate was further added thereto, and refluxed for 7 hours. Thereafter, 4.5 g of 3-aminopropyl triethoxy silan and 1.2 g of amino propane were added thereto and the resulting mixture was stirred for 6 hours at room temperature, The mixture was put into 1.5 liter of ethyl acetate, and the resulting precipitated solid matter was filtered off and was washed with ethyl acetate to obtain an organic silicon compound having the structure of the exemplified compound (II-24). The weight thereof after having been dried was 39.5 g. It was confirmed by ¹H-NMR that the triethoxy silyl group (Si-OCH₂CH₃ ; 3.5 ppm) was introduced into the terminal. The weight average molecular weight of the polymer as measured by means of GPC (with polyethylene oxide as a reference) was 50,000.

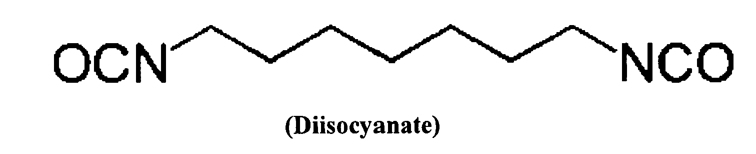

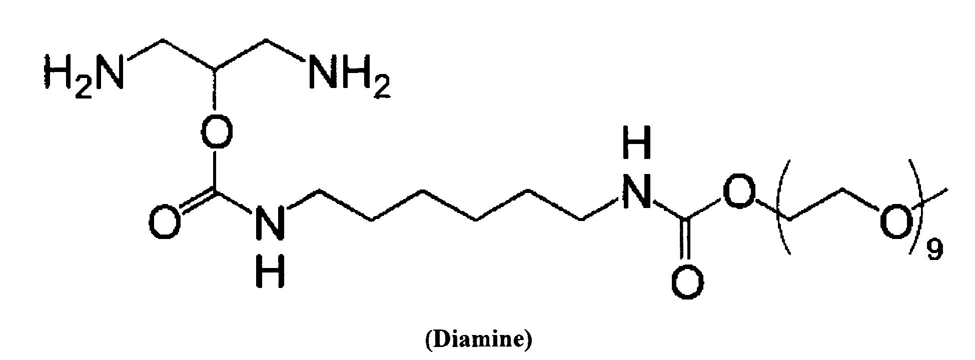

### (Examples 1 to 8)

### [Preparation of the Hydrophilic Composition (sol-gel liquid)]

The components as mentioned in the following hydrophilic coating liquid composition 1 or 2 were homogeneously mixed and the resulting mixture was stirred for 2 hours at a temperature of 20°C to carry out hydrolysis, thereby obtaining a sol-like hydrophilic coating liquid composition.

### <Hydrophilic Composition 1>

- (a) Organic silicon compound (compound as mentioned in Table 1): 25 parts by mass
- (b) Alkoxide compound (compound as mentioned in Table 1): 75 parts by mass
- Distilled water: 1008 parts by mass
- Ethanol: 68 parts by mass

### (Examples 9 to 15)

### <Hydrophilic Composition 2>

- (a) Organic silicon compound (compound as mentioned in Table 1) : 22 parts by mass
- (b)Alkoxide compound (compound as mentioned in Table 1) : 67 parts by mass
- (c) Catalyst (compound as mentioned in Table 1) : 11 parts by mass
- Distilled water: 1008 parts by mass
- Ethanol: 68 parts by mass

### [Preparation of the Surface Hydrophilic Member]

On a glass plate (made by Endo Kagaku K.K.) which was a substrate, the hydrophilic coating liquid compositions of the Examples 1 to 15 were coated such that the coat amount after it had been dried might be 2 g / m², and thereafter heat-dried at a temperature of 100°C for ten minutes to form a hydrophilic layer on the substrate, thereby obtaining surface-hydrophilic members of Examples 1 to 15.

### (Comparative Example 1)

In the Example 9, with the exception of using a comparative organic silicon compound (1) [mentioned in Table 1 as (1)] which is out of the range of the present invention and has the structure as shown below instead of the organic silicon compound (I-1) of the present invention, the same method was carried out to obtain a surface-hydrophilic member of Comparative Example 1.

### (Comparative Example 2)

In the Example 9, with the exception of using a comparative organic silicon compound (2) [mentioned in Table 1 as (2)] which is out of the range of the present invention and has the structure as shown below instead of the organic silicon compound (I-1) of the present invention, the same method was carried out to obtain a surface-hydrophilic member of Comparative Example 2.

### [Evaluation of surface hydrophilic member]

### [Evaluation of abrasion resistance]

The surface of the obtained hydrophilic member was rubbed 100 times with a non-woven fabric (BEMCOT, manufactured by Asahi Kagaku Seni Co.), and the contact angle (contact angle of a water droplet in air) before and after the rubbing was measured using a DropMaster 500, manufactured by Kyowa Interface Science Co., Ltd. Evaluation was carried out such that the smaller the change of the contact angle between before and after rubbing was, the less the decrease in hydrophilicity was, and the more excellent the durability was.
A: change of the contact angle before and after rubbing of 1° or less
B: greater than 1° but not greater than 2°
C: greater than 2°

### [Evaluation of anti-fogging property]

Steam was applied to the hydrophilic members obtained as described above during the daytime under a fluorescent lamp in a room for one min and then they were isolated from the steam. Then, they were placed in an environment at 25°C and RH 10% and under a fluorescent lamp of the same illumination conditions as those described above, and the state of fogging and the change thereof were functionally evaluated into three levels according to the following standards.
A: fogging is not observed
B: fogging is observed but within 10 sec the fogging becomes unobserved.
C: fogging is observed and the fogging is still observed even after 10 sec.

### [Evaluation of anti-staining property]

Lines were drawn with an oil-based ink (oil-based marker manufactured by Mitsubishi Pencil Co.) on the surface of the hydrophilic members described above, water was applied continuously, and functional evaluation into three levels was carried out as to whether or not the ink was washed off.
A: ink is washed off within one min.
B: ink is washed off after one min has passed.
C: ink is not washed off even after 2 to 10 min.

The results of evaluation for abrasion resistance, anti-staining property and anti-fogging property are shown in the following Table 1.

**Table 1**

| | Components of the Hydrophilic Composition | | | Performance Evaluation | | |
|---|---|---|---|---|---|---|
| | Organic silicon compound | Alkoxide compound | Catalyst | Abrasion resistance | Anti-fogging property | Anti-staining property |
| Example 1 | (I-1) | Tetramethoxy silane | - | B | A | A |
| Example 2 | (1-2) | Tetraethoxy silane | - | B | A | A |
| Example 3 | (I-11) | Tetramethoxy silane | - | B | A | A |
| Example 4 | (I-23) | Tetramethoxy silane | - | B | B | A |
| Example 5 | (II-1) | Tetramethoxy silane | - | B | A | A |
| Example 6 | (II-2) | Tetraethoxy silane | - | B | A | A |
| Example 7 | (II-15) | Tetramethoxy silane | - | B | A | A |
| Example 8 | (II-24) | Tetramethoxy silane | - | B | A | A |
| Example 9 | (I-1) | Tetraethoxy silane | Titanium acetyl acetonate | A | A | A |
| Example 10 | (II-1) | Tetramethoxy silane | Titanium acetyl acetonate | A | A | A |
| Example 11 | (I-1) | Tetramethoxy silane | Nitric acid | A | A | A |
| Example 12 | (II-1) | Tetraethoxy silane | Nitric acid | A | A | A |
| Example 13 | (I-1) | Aluminum ethoxide | Titanium acetyl acetonate | A | A | A |
| Example 14 | (I-1) | Zirconium ethoxide | Titanium acetyl acetonate | A | A | A |
| Example 15 | (I-I) | Titanium ethoxide | Titanium acetyl acetonate | A | A | A |
| Comparative Example 1 | (1) | Tetramethoxy silane | Titanium acetyl acetonate | A | C | C |
| Comparative Example 2 | (2) | Tetramethoxy silane | Titanium acetyl acetonate | B | B | C |

The structures of the organic silicon compounds (1) and (2) and the alkoxide compound as mentioned in Table 1 are shown below.

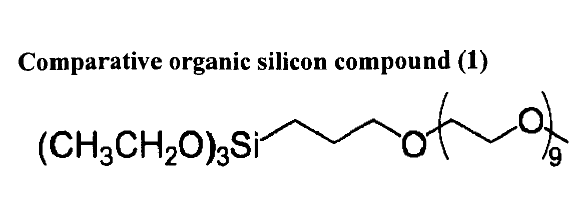

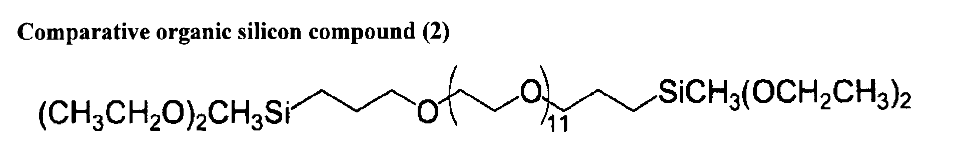

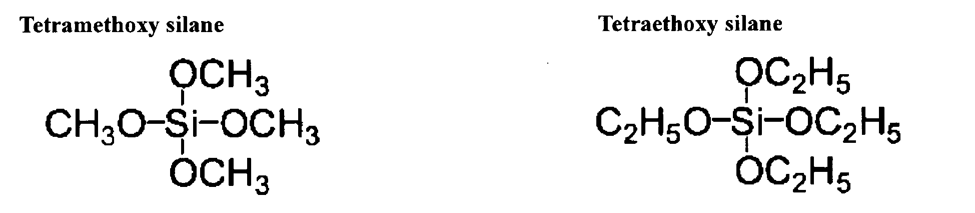

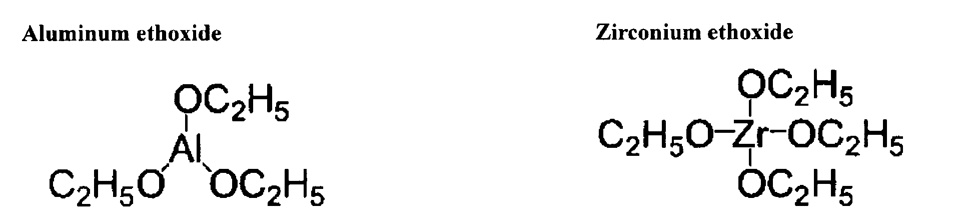

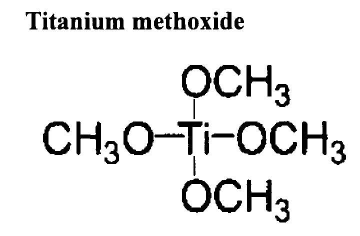

As is clear from Table 1, the hydrophilic coating formed using the hydrophilic composition of the invention was excellent in an anti-staining property and anti-fogging property, and the abrasion resistance was good. Also, in comparison of Examples 1 to 8 with Examples 9 to 15, it can be found that the abrasion resistance was further improved by the addition of the catalyst when the hydrophilic coating was formed.

On the other hand, in the case of the hydrophilic coatings of the Comparative Examples 1 and 2 which were formed using the hydrophilic compositions containing the organic silicon compounds which were out of the range of the invention, the anti-staining property and the anti-fogging property were not sufficient and were in such a level that had problems in practical use.

The present invention provides at least the following embodiments 1 to 10.
1. An organic silicon compound represented by the following Formula (I) or Formula (II):

   **Formula (I)** (R¹)ₓ(OR²)₃₋ₓSi-L¹-(A)-L²-Si(OR³)_{3-y}(R⁴)_{y}

   **Formula (II)** (R⁵)_{z}(OR⁶)_{3-z}Si-L³-(B)-R⁷

   wherein, in Formula (I), R¹ to R⁴ each independently represent a hydrogen atom or a hydrocarbon group having 8 or less carbon atoms; x and y each independently represent an integer from 0 to 2; L¹ and L² each independently represent a divalent linking group having three or more different atoms selected from the group consisting of a carbon atom, a hydrogen atom, an oxygen atom, a nitrogen atom and a sulfur atom; and A represents a polymer or oligomer having a repeating structure formed by a structural unit; and in Formula (II), R⁵ and R⁶ each independently represent a hydrogen atom or a hydrocarbon group having 8 or less carbon atoms; R⁷ represents a hydrogen atom or a monovalent non-metal atom group; z represents an integer from 0 to 2; L³ represents a divalent linking group having three or more different atoms selected from the group consisting of a carbon atom, a hydrogen atom, an oxygen atom, a nitrogen atom and a sulfur atom; and B represents a polymer or oligomer having a repeating structure formed by a structural unit.
2. The organic silicon compound of embodiment 1, wherein each of L¹ to L³ contains at least one linking group selected from the following: 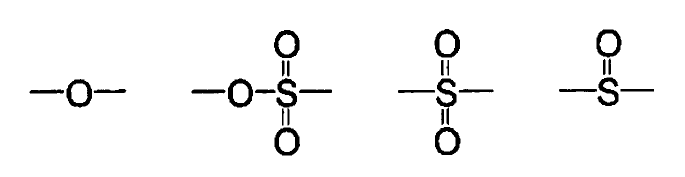 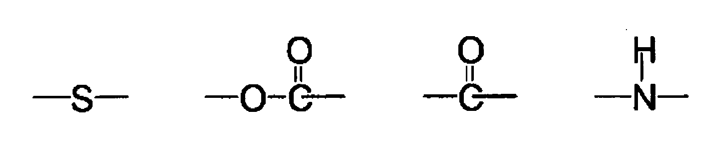 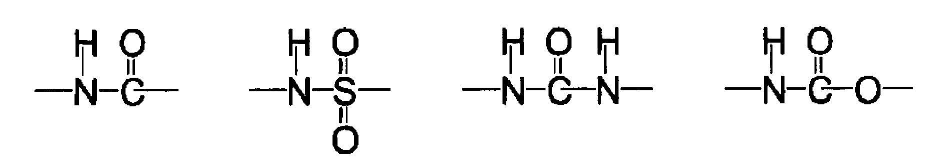 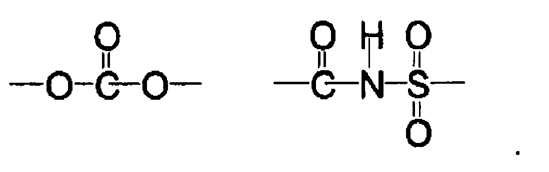
3. The organic silicon compound of embodiment 1, wherein each of A and B contains at least one selected from the group consisting of poly(oxyalkylene), polyurethane, polyurea, polyester and polyamide.
4. The organic silicon compound of embodiment 1, having a weight average molecular weight of 100 to 1,000,000.
5. A hydrophilic composition containing the organic silicon compound of embodiment 1 and an alkoxide compound of an element selected from the group consisting of Si, Ti, Zr and Al.
6. The hydrophilic composition of embodiment 5, wherein the alkoxide compound is a compound represented by the following formula (III):

   **Formula (III)** (R⁸)ₖ-X-(OR⁹)₄₋ₖ

   wherein R⁸ represents a hydrogen atom, an alkyl group or an aryl group; R⁹ represents an alkyl group or an aryl group; X represents Si, Al, Ti or Zr; and k represents an integer from 0 to 2.
7. The hydrophilic composition of embodiment 5, further containing a catalyst for promoting a reaction of the organic silicon compound with the alkoxide compound.
8. The hydrophilic composition of embodiment 7, wherein the catalyst is an acidic catalyst or a basic catalyst.
9. A hydrophilic member comprising a support and a hydrophilic coating that is prepared by forming on the support a coating of the hydrophilic composition of embodiment 5 and then heating and drying the coating.
10. The hydrophilic member of embodiment 9, wherein the support is transparent.

According to the invention, it is possible to provide such a kind of organic silicon compound that may be used for forming a hydrophilic coating having an excellent anti-staining property and anti-fogging property on the surface of various kinds of substrates. Further, by adding the organic silicon compound of the invention, it is possible to provide such a kind of hydrophilic composition that is capable of forming a hydrophilic coating having an excellent anti-staining property and anti-fogging property and also such a kind of hydrophilic member that has a coating formed by the hydrophilic composition and is excellent in an anti-staining property and anti-fogging property and durability.

The actions of the invention are not clear, but are presumed as follows.

The organic silicon compound having the specific structure of the invention contains a hydrolytic and poly-condensing functional group. When dissolving and stirring such an organic silicon compound in a suitable solvent, the hydrolysis and poly-condensation progress in the system, thus forming a crosslinked structure. By coating it on a substrate and drying it, it is possible to form on the substrate a coating that contains the organic silicon compound and that has excellent hydrophilicity and excellent coating strength due to the crosslinked structure.

## Claims

1. An organic silicon compound represented by the following Formula (I) or Formula (II):
**Formula (I)** (R¹)ₓ(OR²)₃₋ₓSi-L¹-(A)-L²-Si(OR³)_{3-y}(R⁴)_{y}
**Formula (II)** (R⁵)_{z}(OR⁶)_{3-z}Si-L³-(B)-R⁷
wherein, in Formula (I), R¹ to R⁴ each independently represent a hydrogen atom or a hydrocarbon group having 8 or less carbon atoms; x and y each independently represent an integer from 0 to 2; L¹ and L² each independently represent a divalent linking group having three or more different atoms selected from the group consisting of a carbon atom, a hydrogen atom, an oxygen atom, a nitrogen atom and a sulfur atom; and A represents a polymer or oligomer having a repeating structure formed by a structural unit; and
in Formula (II), R⁵and R⁶ each independently represent a hydrogen atom or a hydrocarbon group having 8 or less carbon atoms; R⁷ represents a hydrogen atom or a monovalent non-metal atom group; z represents an integer from 0 to 2; L³ represents a divalent linking group having three or more different atoms selected from the group consisting of a carbon atom, a hydrogen atom, an oxygen atom, a nitrogen atom and a sulfur atom; and B represents a polymer or oligomer having a repeating structure formed by a structural unit.

2. The organic silicon compound of Claim 1, wherein each of L¹ to L³ contains at least one linking group selected from the following: '

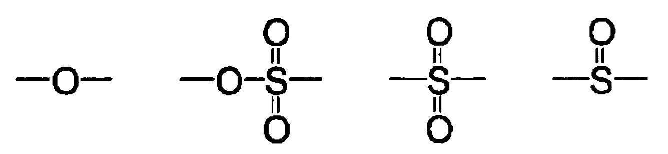

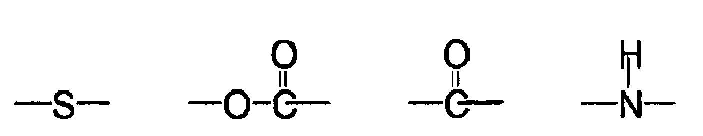

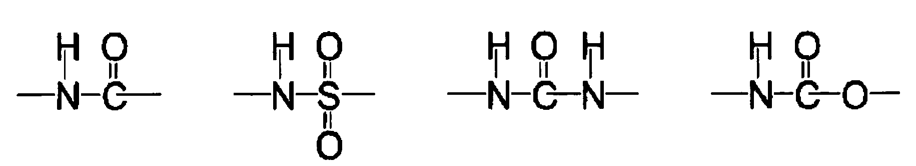

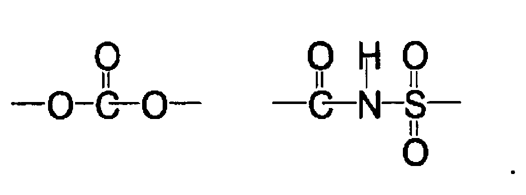

3. The organic silicon compound of Claim 1, wherein each of A and B contains at least one selected from the group consisting of poly(oxyalkylene), polyurethane, polyurea, polyester and polyamide.

4. The organic silicon compound of Claim 1, having a weight average molecular weight of 100 to 1,000,000.

5. A hydrophilic composition containing the organic silicon compound of Claim 1 and an alkoxide compound of an element selected from the group consisting of Si, Ti, Zr and Al.

6. The hydrophilic composition of Claim 5, wherein the alkoxide compound is a compound represented by the following formula (III):
**Formula (III)** (R⁸)ₖ-X-(OR⁹)₄₋ₖ
wherein R⁸ represents a hydrogen atom, an alkyl group or an aryl group; R⁹ represents an alkyl group or an aryl group; X represents Si, Al, Ti or Zr; and k represents an integer from 0 to 2.

7. The hydrophilic composition of Claim 5, further containing a catalyst for promoting a reaction of the organic silicon compound with the alkoxide compound.

8. The hydrophilic composition of Claim 7, wherein the catalyst is an acidic catalyst or a basic catalyst.

9. A hydrophilic member comprising a support and a hydrophilic coating that is prepared by forming on the support a coating of the hydrophilic composition of claim 5 and then heating and drying the coating.

10. The hydrophilic member of Claim 9, wherein the support is transparent.
